(19) Europäisches Patentamt
European Patent Office
Office européen des brevets

(11) EP 1 669 406 B1

(12) # EUROPEAN PATENT SPECIFICATION

(45) Date of publication and mention of the grant of the patent:
**24.12.2008 Bulletin 2008/52**

(21) Application number: **04717871.0**

(22) Date of filing: **05.03.2004**

(51) Int Cl.:
***C08L 53/00*** $^{(2006.01)}$ ***C08K 5/17*** $^{(2006.01)}$

(86) International application number:
**PCT/JP2004/002913**

(87) International publication number:
**WO 2005/033199 (14.04.2005 Gazette 2005/15)**

(54) **THERMOPLASTIC ELASTOMER COMPOSITION**
THERMOPLASTISCHE ELASTOMERZUSAMMENSETZUNG
COMPOSITION D'ELASTOMERE THERMOPLASTIQUE

(84) Designated Contracting States:
**AT BE BG CH CY CZ DE DK EE ES FI FR GB GR HU IE IT LI LU MC NL PL PT RO SE SI SK TR**

(30) Priority: **30.09.2003 JP 2003340674**

(43) Date of publication of application:
**14.06.2006 Bulletin 2006/24**

(73) Proprietor: **KANEKA CORPORATION**
**Osaka-shi, Osaka 530-8288 (JP)**

(72) Inventors:
- **KUMASAKI, Atsushi**
**Osaka 5660072 (JP)**
- **TANIGUCHI, Akio**
**Osaka 5660072 (JP)**
- **KOKUBO, Tadashi**
**Osaka 5660072 (JP)**
- **CHIBA, Takeshi**
**Hyogo 6510073 (JP)**

(74) Representative: **Vossius & Partner**
**Siebertstrasse 4**
**81675 München (DE)**

(56) References cited:
**EP-A2- 0 332 454**
**JP-A- 5 039 426**
**JP-A- 61 089 255**
**JP-A- 2002 356 598**
**JP-A- 2004 107 447**

- **DATABASE WPI Week 200311 Derwent Publications Ltd., London, GB; AN 2003-120654 XP002431127 & WO 02/092696 A1 (CHIBA T) 21 November 2002 (2002-11-21)**
- **DATABASE WPI Week 200176 Derwent Publications Ltd., London, GB; AN 2001-658951 XP002429594 & JP 2001 234147 A (NITTO DENKO CORP) 28 August 2001 (2001-08-28)**
- **DATABASE WPI Week 200307 Derwent Publications Ltd., London, GB; AN 2003-071529 XP002429595 & JP 2002 293835 A (TORAY IND INC) 9 October 2002 (2002-10-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 669 406 B1

## Description

The present invention relates to thermoplastic elastomer compositions, and particularly to a thermoplastic elastomer composition with good physical properties, exhibiting superior rubber elasticity, high-temperature creep characteristics and formability in a wide range of temperature, and also having oil resistance and heat resistance in spite of thermoplastic elastomer.

WO-A-02/092696 discloses a thermoplastic resin composition comprising a thermoplastic resin and block copolymer of (A) methacrylic and (B) acrylic units for the preparation of a thermoplastic resin.

EP-A-0332454 describes a resin composition comprising (A) a copolymer comprising hexagonal units selected from hexagonal acid anhydride units, hexagonal imide units and mixtures thereof, methyl methacrylate units, (meth) acrylic acid units and optionally aromatic vinyl compound units, (B) a graft copolymer rubber, and (C) at least one polymer selected from a polyamide and a polycarbonate, wherein the weight proportions of components (A), (B) and (C) relative to the total weight of components (A), (B) and (C) are in the ranges of from 5 to 50%, from 5 to 50% and from 45 to 80%, respectively.

Vulcanized rubber has superior flexibility and rubber elasticity. For molding, however, it is necessary to compound an additive with the rubber to vulcanize. This undesirably increases the molding cycle time and complicates the process. Thus, the vulcanized rubber has a problem in formability. In addition, since a molded and vulcanized rubber cannot be melted even if it is reheated, subsequently working after vulcanization, such as joining together, is not possible. Thus, the vulcanized rubber is disadvantageously difficult to recycle.

In view of these disadvantages, a thermoplastic elastomer has recently become used instead of the vulcanized rubber. For example, almost of all the sealing parts used in vehicles, such as glass run channels, weather strips, various types of boots, and drip rails, have been formed of vulcanized rubber. Recyclable lightweight olefin thermoplastic elastomers have recently been put into use for some of the sealing parts from the viewpoint of increasing gas mileage and protecting the environment.

Some of such thermoplastic elastomers contain hard segments and soft segments alternately arranged in their copolymer chain (Japanese Unexamined Patent Application Publication No. 61-34050) . This type of thermoplastic elastomer can cover a wide range from flexible ones to stiff ones by varying the proportions of the segments. Another type of composition has also been known which is prepared by melt-kneading a monoolefin copolymer rubber and a polyolefin resin with a crosslinker to partially crosslink them, that is, by dynamically heat-treating (dynamic vulcanization) them, to reduce compression set (Japanese Unexamined Patent Application Publication No. 53-21021).

For a flexible thermoplastic elastomer, however, the former type of thermoplastic elastomer, which alternately contains hard segments and soft segments in their copolymer chain, has to contain a large amount of soft segments. Also, since the hard segments serve as a binding constituent, this type of thermoplastic elastomer can flow at high temperatures, but the heat resistance (the heat resistance here refers to a physical property at a high temperature) and the compression set are disadvantageously degraded. In addition, soft segments have low tensile strength, inferior heat resistance and oil resistance. Accordingly, the flexible thermoplastic elastomers containing a large amount of such soft segments have a low tensile strength, inferior heat resistance and oil resistance and, thus, cannot be used in a wide range of application. Styrene elastomers disclosed in known arts belong to this type. Therefore, they have superior formability, but cannot be used in a wide range of application, such as for industrial mechanical components, due to the above-described disadvantage. On the other hand, acrylic block copolymers containing a methacrylic copolymer block and an acrylic copolymer block have recently been disclosed as an oil-resistant thermoplastic elastomer (Japanese Patent No. 2553134). This type of thermoplastic elastomer, as well as styrene elastomers, has superior formability, but the heat resistance and the compression set are disadvantageously inferior.

In the latter type of polyolefin, a thermoplastic elastomer containing a partially crosslinked olefin copolymer rubber has been studied as an one technique for improving the characteristics, such as compression set at a high temperature, if the thermoplastic elastomer alone cannot exhibit satisfactory characteristics.

Unfortunately, crystalline polyolefins, such as polyethylene and polypropylene, have a relatively low melting point and a low oil resistance. Accordingly, the use of resulting compositions is limited to, for example, parts not requiring heat resistance. In order to overcome the above-described problems, partially crosslinked thermoplastic elastomers have been studied in which a thermoplastic resin, such as polyester, polycarbonate, or polyamide, is combined with a polar rubber, such as acrylic rubber, ethylene-acrylic ester copolymer rubber, or nitrile rubber (Japanese Unexamined Patent Application Publication Nos. 10-53697, 11-349734, and 2000-26720). However, if the thermoplastic resin is heat-resistant, it is difficult to control crosslinking so as to provide a desired composition because of its high melting temperature. In addition, known crosslinkers for the polar rubber negatively affect the thermoplastic resin in a curing step and, thus, degrade the physical properties of the resulting composition. A process to overcome this problem, using a crosslinker, such as a polyfunctional oxazoline, has been disclosed (Japanese Unexamined Patent Application Publication No. 11-246749). However, this process has disadvantages in availability and ease of handling and limits the type of applicable crosslinker. Accordingly, a readily available oil-resistant, heat-resistant thermoplastic elastomer easy to cure, that is,

easy to make, has been desired.

The present invention relates to thermoplastic elastomer compositions, and more specifically to a thermoplastic elastomer composition having good balance between the hardness and the mechanical strength, exhibiting superior rubber elasticity in a wide range of temperature, high-temperature creep characteristics and formability, and having oil resistance and heat resistance in spite of thermoplastic elastomer.

The inventors of the present invention found that by dynamically heat-treating a thermoplastic elastomer composition comprising (A) a (meth)acrylic block copolymer comprising (A1) a (meth) acrylic polymer block and (A2) an acrylic polymer block; (B) a compound containing at least two amino groups in its molecule; and (C) a thermoplastic resin, the thermoplastic elastomer has a good balance between the hardness and the mechanical strength, exhibiting superior rubber elasticity in a wide range of temperature, high-temperature creep characteristics, low-temperature impact resistance, mechanical strength, and formability, and having oil resistance and heat resistance in spite of thermoplastic elastomer. Thus, the inventors accomplished the present invention.

Specifically, the present invention relates to a thermoplastic elastomer composition comprising (A) a (meth) acrylic block copolymer; (B) a compound containing at least two amino groups in its molecule; and (C) a thermoplastic resin. The (meth)acrylic block copolymer (A) comprises (A1) a (meth)acrylic polymer block and (A2) an acrylic polymer block. At least one of the polymer blocks has at least one acid anhydride group expressed by general formula (1):

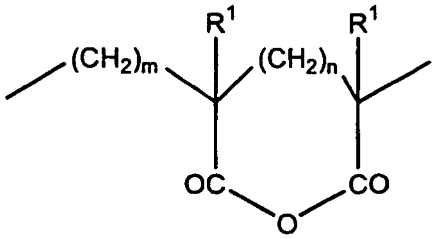

(1)

(wherein $R^1$ each represent hydrogen or the methyl group and may be the same or different; n represents an integer in the range of 0 to 3; and m represents an integer of 0 or 1). The (meth)acrylic block copolymer (A) and the compound (B) are dynamically vulcanized in the thermoplastic resin (C).

Preferably, the (meth)acrylic block copolymer (A) is at least one selected from the group consisting of copolymers expressed by the general formulas $(A1\text{-}A2)_n$, $A2\text{-}(A1\text{-}A2)_n$, and $(A1\text{-}A2)_n\text{-}A1$ (wherein n represents an integer of 1 or more).

Preferably, the (meth)acrylic block copolymer (A) comprises 0 .1 to 60 percent by weight of the (meth) acrylic polymer block (A1) and 99.9 to 40 percent by weight of the acrylic polymer block (A2).

Preferably, the (meth) acrylic polymer block (A1) contains the acid anhydride group.

Preferably, the acrylic polymer block (A2) contains the acid anhydride group.

Preferably, the (meth)acrylic block copolymer (A) is prepared under control by atom transfer radical polymerization.

Preferably, the thermoplastic resin (C) is a polyamide-based resin and/or a polyester-based resin.

Preferably, the thermoplastic resin (C) is a polyamide-based resin.

Preferably, the thermoplastic elastomer composition further comprises 1 to 300 parts by weight of a softening agent (D) relative to 100 parts by weight of the (meth)acrylic block copolymer (A).

Since the thermoplastic elastomer composition of the present invention has good balance between the hardness and the mechanical strength, exhibits superior rubber elasticity, high-temperature creep characteristics and formability in a wide range of temperature, and has oil resistance and heat resistance in spite of thermoplastic elastomer, it can be suitably used for a wide range of applications, such as various types of hermetic container, gaskets, oil-resistant hoses, and coating sheets.

The present invention relates to the thermoplastic elastomer composition comprising (A) a (meth)acrylic block copolymer; (B) a compound containing at least two amino groups in its molecule; and (C) a thermoplastic resin. The (meth) acrylic block copolymer (A) comprises (A1) a (meth) acrylic polymer block and (A2) an acrylic polymer block. At least one of the polymer blocks has at least one acid anhydride group expressed by general formula (1):

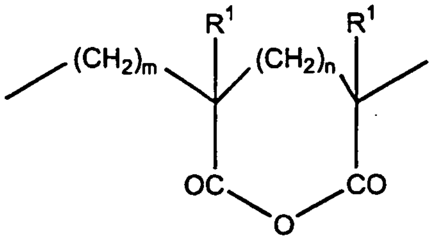

(1)

(wherein $R^1$ each represent hydrogen or the methyl group and may be the same or different; n represents an integer in the range of 0 to 3; and m represents an integer of 0 or 1). The (meth)acrylic block copolymer (A) and the compound (B) are dynamically vulcanized in the thermoplastic resin (C).

Dynamic vulcanization herein means that a system containing the (meth)acrylic block copolymer (A), the compound (B) containing at least two amino groups in its molecule, and the thermoplastic resin (C) is melt-kneaded to crosslink the (meth)acrylic block copolymer (A) and the compound (B) in the thermoplastic resin (C). This dynamic vulcanization provides a thermoplastic elastomer composition having enhanced physical properties. As for the morphology of the thermoplastic elastomer, it is preferable from the viewpoint of rubber elasticity and the like that the crosslinked (meth)acrylic block copolymer (A) is dispersed in the thermoplastic resin (C) as matrix, which is the continuous phase. It is also preferable from the viewpoint of flexibility and the like that the crosslinked (meth) acrylic block copolymer (A) and the thermoplastic resin (C) form a continuous structure respectively.

<(Meth)acrylic block copolymer (A)>

The (meth) acrylic block copolymer (A) used in the present invention may be a linear block copolymer or a branched (stellate) block copolymer, or a mixture of them. The structure of this block copolymer is selected according to required physical properties of the (meth)acrylic block copolymer (A) and requirements of the composition comprising the block copolymer and the thermoplastic resin, such as workability and mechanical characteristics. Preferably, a linear block copolymer is used from the viewpoint of costs and ease of polymerization.

The (meth)acrylic block copolymer (A) comprises a (meth)acrylic polymer block (A1) and an acrylic polymer block (A2). Preferably, the (meth)acrylic block copolymer (A) is at least one acrylic block copolymer selected from the group consisting of copolymers expressed by the general formulas $(A1\text{-}A2)_n$, $A2\text{-}(A1\text{-}A2)_n$, $(A1\text{-}A2)_n\text{-}A1$ (wherein n represents an integer of 1 or more), from the viewpoint of physical properties of the composition, such as tensile strength and compression set. Among these, preferred (meth)acrylic block copolymers (A) are, but not particularly limited to, A1-A2 diblock copolymers, A1-A2-A1 triblock copolymers, and their mixtures from the viewpoint of ease of process handling and the physical properties of the composition.

Preferably, the (meth) acrylic block copolymer (A) has the acid anhydride group expressed by general formula (1):

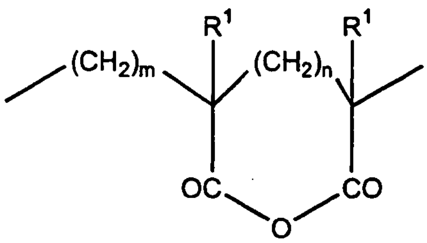

(1)

(wherein $R^1$ each represent hydrogen or the methyl group, and may be the same or different, n represents an integer in the range of 0 to 3, and m represents an integer of 0 or 1) from the viewpoint of being dynamically vulcanized with the compound (B) containing at least two amino groups in its molecule.

The number of acid anhydride groups expressed by general formula (1) may be one or more for each polymer block. If the number is two or more, the monomers in the polymer block can form a block copolymer. For example, an x-y-x type triblock copolymer maybe in any one of the forms of (x/z) -y-x, (x/z) -y-(x/z), z-x-y-x, z-x-y-x-z, x-(y/z)-x, x-y-z-x, x-z-y-x, and x-z-y-z-x. Here, z expresses a monomer or polymer block containing the acid anhydride group; (x/z) expresses the form in which a monomer containing the acid anhydride group is copolymerized with a block (x) ; and (y/z) expresses the form in which a monomer containing the acid anhydride group is copolymerized with a block (y).

The number average molecular weight of the (meth)acrylic block copolymer (A) is not particularly limited, and can be set according to the required molecular weights of the (meth) acrylic polymer block (A1) and the acrylic polymer block (A2). A small molecular weight does not lead to mechanical characteristics sufficient to function as an elastomer. In contrast, an excessively large molecular weight negatively affects the workability. Accordingly, the number average molecular weight is preferably in the range of 3,000 to 500,000, more preferably in the range of 4,000 to 400,000, and still more preferably in the range of 5,000 to 300,000.

The ratio (Mw/Mn) of the weight average molecular weight (Mw) to the number average molecular weight of the (meth) acrylic block copolymer (A) measured by gel permeation chromatography is not particularly limited, but preferably 1.8 or less, and more preferably 1. 5 or less. An Mw/Mn of more than 1. 8 may negatively affect the uniformity of the acrylic block copolymer.

In the (meth) acrylic block copolymer (A), the composition ratio of the (meth)acrylic polymer block (A1) to the acrylic polymer block (A2) is not particularly limited, and can be set according to the physical properties required in application, the formability of the composition required in the process, and the required molecular weights of the (meth) acrylic polymer block (A1) and the acrylic polymer block (A2). For preferred proportions of the (meth)acrylic polymer block (A1) and the acrylic polymer block (A2), for example, the content of the (meth)acrylic polymer block (A1) is in the range of 0.1 to 80 percent by weight, and the content of the acrylic polymer block (A2) is in the range of 99.9 to 20 percent by weight. More preferably, the content of the (meth) acrylic polymer block (A1) is in the range of 0.1 to 70 percent by weight and the content of the acrylic polymer block (A2) is in the range of 99.9 to 30 percent by weight. Still more preferably, the content of the (meth)acrylic polymer block (A1) is in the range of 0.1 to 60 percent by weight and the content of the acrylic polymer block (A2) is in the range of 99.9 to 40 percent by weight. A (meth) acrylic polymer block (A1) content of less than 0.1 percent by weight may degrade the rubber elasticity at high temperatures. A content of more than 80 percent by weight may degrade the mechanical characteristics of the elastomer, particularly the fracture elongation, and flexibility of the composition with the thermoplastic resin.

The relationship in glass transition temperatures between the (meth)acrylic polymer block (A1) and the acrylic polymer block (A2) constituting the (meth)acrylic block copolymer (A) preferably satisfies the following expression, wherein the glass transition temperatures of the (meth) acrylic polymer block (A1) and the acrylic polymer block (A2) are denoted as $Tg_{A1}$ and $Tg_{A2}$, respectively.

$$Tg_{A1} > Tg_{A2}$$

The glass transition temperature (Tg) of the polymer, the (meth)acrylic polymer block (A1) and the acrylic polymer block (A2), can be generally set by setting the weight fractions of the monomers constituting polymer portions according to the following Fox equation:

$$1/Tg = (W_1/Tg_1) + (W_2/Tg_2) + ... + (W_m/Tg_m)$$

$$W_1 + W_2 + ... + W_m = 1$$

In the equations, Tg represents the glass transition temperature of a polymer, and $Tg_1$ and $Tg_2$ to $Tg_m$ represent the glass transition temperatures of homopolymers constituted of a same type of monomers. $W_1$ and $W_2$ to $W_m$ represent the weight fractions of the monomers.

The glass transition temperature of the monomer constituting each polymer can be referred to Polymer Handbook, Third Edition (Wiley-Interscience, 1989).

The process for introducing the acid anhydride group to (meth)acrylic block copolymer (A) is not particularly limited, the acid anhydride group being expressed by general formula (1) :

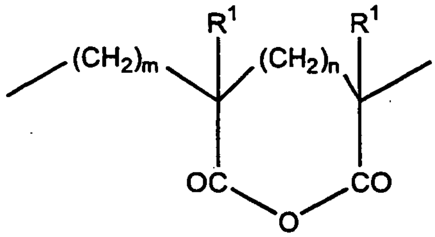

(1)

(wherein $R^1$ each represent hydrogen or the methyl group and may be the same or different, n represents an integer in the range of 0 to 3, and m represents an integer of 0 or 1). However, it is preferable that a functional group being a precursor of the acid anhydride group be introduced to the acrylic block copolymer and then cyclized, from the viewpoint of the eases of introduction and subsequent purification.

n in general formula (1) is an integer in the range of 0 to 3, preferably 0 or 1, and more preferably 1. An n value of 4 or more tends to complicate polymerization and make it difficult to cyclize the acid anhydride group.

And m in general formula (1) is an integer of 0 or 1. It is preferable that m represent 0 if n is 0, and that m represent 1 if n is 1 to 3.

The acid anhydride group may be contained in one of the (meth)acrylic polymer block (A1) and the acrylic polymer block (A2) or both. The acid anhydride group may be set according to the reaction site of the (meth) acrylic block copolymer (A), the cohesion between the blocks constituting the (meth) acrylic block copolymer (A), their glass transition temperatures thereof, and required physical properties of the (meth)acrylic block copolymer (A). For example, in the case that the (meth) acrylic polymer block (A1) or the acrylic polymer block (A2) is selectively modified or allowed to react with a compound having an amino group or a hydroxy group, using the acid anhydride group as a reaction site, the acid anhydride group may be introduced to the block to be modified or allowed to react. If the molecular weight between crosslinking points needs to be controlled, the acid anhydride group may be introduced to the (meth)acrylic polymer block (A1); if the compatibility with the thermoplastic resin (C) needs to be controlled, the acid anhydride group may be introduced to the acrylic polymer block (A2). Preferably, the acid anhydride group may be present in one of the (meth) acrylic polymer block (A1) and the acrylic polymer block (A2) from the viewpoint of the reaction site control, the heat resistance and the rubber elasticity, but it is not limited to this. If the acid anhydride group is present in the (meth) acrylic polymer block (A1), both $R^1$ in general formula (1) are preferably, but not limited to, the methyl group; if it is in the acrylic polymer block, both $R^1$ are preferably, but not limited to, hydrogen. If the (meth)acrylic polymer block (A1) contains an acid hydride group whose $R^1$ is hydrogen or if the acrylic polymer block (A2) contains an acid anhydride group whose $R^1$ is the methyl group, polymerizing operation of the (meth)acrylic block copolymer (A) may be complicated, or the difference in glass transition temperature between the methacrylic polymer block (A1) and the acrylic polymer block (A2) may be reduced to degrade the rubber elasticity of the (meth)acrylic block copolymer (A).

The preferred acid anhydride group content depends on the cohesion and reactivity of the acid anhydride group, the structure and composition of the (meth)acrylic block copolymer (A), the number and glass transition temperatures of blocks constituting the (meth)acrylic block copolymer (A), and the position and form of the acid anhydride group. For example, the acid anhydride group content is preferably in the range of 0.05 to 50 percent by weight in the entirety of the (meth) acrylic block copolymer (A), and more preferably in the range of 0.1 to 40 percent by weight. An acid anhydride group content of less than 0.05 percent by weight may make insufficient in the reactivity and the compatibility with the thermoplastic resin of the (meth)acrylic block copolymer (A), and an acid anhydride group content of more than 50 percent by weight may degrade the rubber elasticity of the (meth) acrylic block copolymer (A), or degrade the fluidity of the resulting thermoplastic elastomer due to a reaction with a large amount of the crosslinker (B) or a reaction with the thermoplastic resin (C). In addition, if an acid anhydride group having a high Tg is introduced to the (meth)acrylic polymer block (A1), which is a hard segment, to increase the heat resistance of the (meth) acrylic block copolymer (A), an acid anhydride group content of less than 0.05 percent by weight may not sufficiently increase the heat resistance, thus negatively affecting the rubber elasticity at high temperatures.

The acid anhydride group content refers to a content on a percent-by-weight basis of the monomer originally having the acid anhydride group or the monomer given the acid anhydride group by reaction. This content can be obtained by $^{13}C$-NMR analysis. Specifically, resin is dissolved in heavy acetone(acetone-d6), and then subjected to $^{13}C$-NMR analysis. In this instance, if the (meth)acrylic block copolymer skeleton is of a (meth)acrylic ester, a signal of the carboxyl group derived from the (meth) acrylic ester unit is observed in the range of 174 to 178 ppm, and a signal of the carbonyl site of the (meth) acrylic acid anhydride skeleton is observed in the range of 171 to 173 ppm. By comparing these signals, the quantity of the acid anhydride group can be determined. If another copolymerizable vinyl monomer is introduced, the composition is analyzed by pyrolysis GC-MS monomer determination, NMR, or the like.

The block containing the acid anhydride group and the acid anhydride group content are appropriately selected,

as described above according to the required reactivity, reaction site, cohesion, glass transition temperature and so forth.

<(Meth)acrylic polymer block (A1)>

The (meth)acrylic polymer block (A1) contains 100 to 50 percent by weight of a monomer having a (meth) acrylic ester and/or the acid anhydride group and 0 to 50 percent by weight of a vinyl monomer capable of being copolymerized with the former monomer, and preferably contains 100 to 75 percent by weight of the monomer having a (meth) acrylic ester and/or the acid anhydride group and 0 to 25 percent by weight of the copolymerizable vinyl monomer, from the viewpoint of ease of preparing a (meth)acrylic block copolymer having desired physical properties, costs, and availability. A content of less than 50 percent by weight of the monomer having the (meth)acrylic ester and/or the acid anhydride group may negatively affect the characteristic features of (meth)acrylic esters, such as weather resistance, high glass transition temperature, and compatibility with the resin.

The molecular weight of the (meth)acrylic polymer block (A1) can be set according to the required cohesion of the (meth)acrylic polymer block (A1), the time required for polymerization, and other factors.

The cohesion depends on the degrees of interaction and entanglement among molecules. As the molecular weight is increased, the cohesion increases due to increased entanglement. Specifically, when the required molecular weight of the (meth)acrylic polymer block (A1) is denoted by $M_{A1}$ and the molecular weight between entangling points is denoted by $MC_{A1}$, preferably the relationship $M_{A1} > MC_{A1}$ holds if cohesion is required. If more cohesion is required, preferably, the relationship $M_{A1} > 2 \times MC_{A1}$ holds; if a certain cohesion and creep characteristics are required together, the relationship $MC_{A1} < M_{A1} < 2 \times MC_{A1}$ holds. The molecular weight between entangling points can be referred to, for example, Wu et al. (Polym. Eng. and Sci. , 1990, Vol. 30, p. 753) . For example, a number average molecular weight of a (meth) acrylic polymer block (A1) requiring cohesion, composed entirely of methyl methacrylate is preferably 100 or more. Since polymerization time tends to increase as the number average molecular weight increases, the molecular weight may be set according to required productivity. It is preferably set at 200,000 or less, and more preferably 100,000 or less. However, since the introduction of the acid anhydride group gives the (meth)acrylic polymer block (A1) a cohesion, the molecular weight can be set lower than these values.

(Meth)acrylic esters constituting the (meth)acrylic polymer block (A1) include methacrylic esters and acrylic esters. Exemplary methacrylic esters include: aliphatic hydrocarbon (for example alkyl) methacrylates, such as methyl methacrylate, ethyl methacrylate, n-propyl methacrylate, n-butyl methacrylate, isobutyl methacrylate, n-pentyl methacrylate, n-hexyl methacrylate, n-heptyl methacrylate, n-octyl methacrylate, 2-ethylhexyl methacrylate, nonyl methacrylate, decyl methacrylate, dodecyl methacrylate, and stearyl methacrylate; alicyclic hydrocarbon methacrylates, such as cyclohexyl methacrylate and isobornyl methacrylate; aralkyl methacrylates, such as benzyl methacrylate; aromatic hydrocarbon methacrylates, such as phenyl methacrylate and toluyl methacrylate; esters of a methacrylic acid and an alcohol with a functional group having an ethereal oxygen, such as 2-methoxyethyl methacrylate and 3-methoxybutyl methacrylate; alkyl fluoride methacrylates, such as trifluoromethyl methacrylate, 2-trifluoroethyl methacrylate, 2-perfluoroethylethyl methacrylate, 2-perfluoroethyl-2-perfluorobutylethyl methacrylate, 2-perfluoroethyl methacrylate, perfluoromethyl methacrylate, diperfluoromethylmethyl methacrylate, 2-perfluoromethyl-2-perfluoroethylmethyl methacrylate, 2-perfluorohexylethyl methacrylate, 2-perfluorodecylethyl methacrylate, and 2-perfluorohexadecylethyl methacrylate.

Exemplary acrylic esters constituting the (meth)acrylic polymer block (A1) include: aliphatic hydrocarbon (for example alkyl) acrylates, such as methyl acrylate, ethyl acrylate, n-propyl acrylate, n-butyl acrylate, isobutyl acrylate, n-pentyl acrylate, n-hexyl acrylate, n-heptyl acrylate, n-octyl acrylate, 2-ethylhexyl acrylate, nonyl acrylate, decyl acrylate, dodecyl acrylate, and stearyl acrylate; alicyclic hydrocarbon acrylates, such as cyclohexyl acrylate and isobornyl acrylate; aromatic hydrocarbon acrylates, such as phenyl acrylate and toluyl acrylate; aralkyl acrylates, such as benzyl acrylate; esters of an acrylic acid and an alcohol with a functional group having an ethereal oxygen, such as 2-methoxyethyl acrylate and 3-methoxybutyl acrylate; alkyl fluoride acrylates, such as trifluoromethylmethyl acrylate, 2-trifluoromethylethyl acrylate, 2-perfluoroethylethyl acrylate, 2-perfluoroethyl-2-perfluorobutylethyl acrylate, 2-perfluoroethyl acrylate, perfluoromethyl acrylate, diperfluoromethylmethyl acrylate, 2-perfluoromethyl-2-perfluoroethylmethyl acrylate, 2-perfluorohexylethyl acrylate, 2-perfluorodecylethyl acrylate, and 2-perfluorohexadecylethyl acrylate.

At least one of these (meth) acrylic esters is used. Among these esters, methyl methacrylate is preferable from the viewpoint of compatibility with the thermoplastic resin to be combined, costs, and availability.

Vinyl monomers copolymerizable with the (meth)acrylic ester constituting the (meth) acrylic block copolymer (A) include unsaturated compounds containing a carboxylic acid, aromatic alkenyl compounds, vinyl cyanides, conjugated dienes, unsaturated compounds containing a halogen, unsaturated compounds containing silicon, unsaturated dicarboxylic compounds, vinyl ester compounds, and maleimide compounds.

Exemplary unsaturated compounds containing a carboxylic acid include methacrylic acid and acrylic acid. Exemplary aromatic alkenyl compounds include styrene, α-methylstyrene, p-methylstyrene, and p-methoxystyrene. Exemplary vinyl cyanides include acrylonitrile and methacrylonitrile. Exemplary conjugated dienes include butadiene and isoprene. Exemplary unsaturated compound containing a halogen include vinyl chloride, vinylidene chloride, perfluoroethylene, perfluoropropylene, and vinylidene fluoride. Exemplary unsaturated compounds containing silicon include vinyltrimethoxysilane and vinyltriethoxysilane. Exemplary unsaturated dicarboxylic compounds include maleic anhydride, maleic acid, maleic acid monoalkyl or dialkyl esters, fumaric acid, and fumaric acid monoalkyl or dialkyl esters. Exemplary vinyl ester compounds include vinyl acetate, vinyl propionate, vinyl pivalate, vinyl benzoate, and vinyl cinnamate. Exemplary maleimide compounds include maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide. At least one of these vinyl monomers is used.

A suitable vinyl monomer can be selected according to the compatibility of the (meth) acrylic block copolymer (A) with the thermoplastic resin and/or a thermoplastic elastomer. A polymer constituted of methyl methacrylate is depolymerized nearly quantitatively by thermal decomposition. In order to prevent this depolymerization, an acrylic ester, such as methyl acrylate, ethyl acrylate, butyl acrylate, or 2-methoxyethyl acrylate, their mixture, or styrene may be copolymerized. For still higher oil resistance, acrylonitrile may be copolymerized.

The glass transition temperature of the (meth)acrylic polymer block (A1) is preferably 0°C or more, and more preferably over room temperature. The glass transition temperatures (Tg) of the above-described polymer ((meth)acrylic polymer block (A1)) can be set by setting the weight fractions of the monomers constituting polymer portions according to the foregoing Fox equation. The glass transition temperature herein is defined as a value obtained by calculation in accordance with the Fox equation using glass transition temperatures of monomers listed in Polymer Handbook, Third Edition (Wiley-Interscience, 1989).

<Acrylic polymer block (A2)>

The acrylic polymer block (A2) contains 100 to 50 percent by weight of a monomer having an acrylic ester and/or the acid anhydride group and 0 to 50 percent by weight of a vinyl monomer capable of being copolymerized with the former monomer, and preferably contains 100 to 75 percent by weight of the monomer having an acrylic ester and/or the acid anhydride group and 0 to 25 percent by weight of the copolymerizable vinyl monomer, from the viewpoint of ease of preparing a composition having desired physical properties, costs, and availability. An acrylic ester content of less than 50 percent by weight may negatively affect the characteristic features in use of acrylic esters, and particularly impact resistance.

The molecular weight of the acrylic polymer block (A2) can be set according to the required elastic modulus and rubber elasticity of the acrylic polymer block (A2), the time required for polymerization, and other factors.

Elastic modulus has a close relation to the mobility of the molecular chain and the molecular weight of the chain. Accordingly, an expected elastic modulus is not obtained unless the molecular weight is over a certain level. The same goes for rubber elasticity. Preferably, the molecular weight is high from the viewpoint of rubber elasticity. Specifically, the molecular weight of the acrylic polymer block (A2), $M_{A2}$, preferably satisfies the relationship $M_{A2}$ > 3,000; more preferably $M_{A2}$ > 5,000; still more preferably $M_{A2}$ > 10,000; still further preferably $M_{A2}$ > 20,000; and most preferably $M_{A2}$ > 40,000. Unfortunately, since polymerization time tends to increase as the number average molecular weight increases, the molecular weight may be set according to required productivity. It is preferably set at 500,000 or less, and more preferably 300,000 or less.

Acrylic esters constituting the acrylic polymer block (A2) include the same acrylic esters enumerated in the description of the (meth) acrylic polymer block (A1), and at least one of those acrylic esters is used.

Among those esters n-butyl acrylate is preferable from the viewpoint of impact resistance of the thermoplastic resin composition, costs, and availability. If the composition requires oil resistance, ethyl acrylate is suitable. If the composition requires enhanced low-temperature characteristics, 2-ethylhexyl acrylate is suitable. If both oil resistance and enhanced low-temperature characteristics are required, it is preferable to mix ethyl acrylate, n-butyl acrylate, and 2-methoxyethyl acrylate.

Vinyl monomers copolymerizable with the acrylic ester constituting the acrylic polymer block (A2) include methacrylic esters, aromatic alkenyl compounds, vinyl cyanides, conjugated dienes, unsaturated compounds containing a halogen, unsaturated dicarboxylic compounds, vinyl ester compounds, and maleimide compounds. Examples of these compounds have been enumerated in the description of the (meth)acrylic polymer block (A1). At least one of these vinyl monomers is used.

A suitable vinyl monomer can be selected from these monomers according to the required glass transition temperature, elastic modulus, and polarity of the acrylic polymer block (A2), required physical properties of the composition, and the compatibility with the thermoplastic resin and/or the thermoplastic elastomer. For example, in order to enhance the oil resistance, acrylonitrile may be copolymerized.

The glass transition temperature of the acrylic polymer block (A2) is preferably in the range of -100 to 50°C, and more preferably in the range of -100 to 0°C. A glass transition temperature of more than 50°C may degrade the rubber elasticity of the (meth) acrylic block copolymer (A), and a glass transition temperature of less than -100°C may degrade the mechanical strength of the (meth)acrylic block copolymer (A).

The glass transition temperatures (Tg) of the above-described polymer (acrylic polymer block (A2)) can be set by setting the weight fractions of the monomers constituting polymer portions according to the foregoing Fox equation. The glass transition temperature herein is defined as a value obtained by calculation in accordance with the Fox equation using glass transition temperatures of monomers listed in Polymer Handbook, Third Edition (Wiley-Interscience, 1989).

<Acid anhydride group>

The acid anhydride group is expressed by general formula (1) :

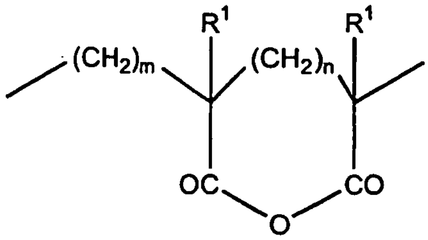

(1)

(wherein $R^1$ each represent hydrogen or the methyl group, and may be the same or different, n represents an integer in the range of 0 to 3, and m represents an integer of 0 or 1). This acid anhydride group has a high reactivity with compounds having an amino group, a hydroxy group, or the like and, accordingly, can be used as a reacting site for modifying the polymer to enhance compatibility with a blended thermoplastic resin and/or thermoplastic elastomer. The acid anhydride can serve as a crosslinking site by a reaction with the compound (B) containing at least two amino group in its molecule. In addition, by introducing the acid anhydride into a desired site of the (meth)acrylic block copolymer (A), the (meth)acrylic block copolymer (A) can be crosslinked at a desired site. Furthermore, the acid anhydride group has a high glass transition temperature (Tg) . Polymers having the acid anhydride group have a high glass transition temperature. Accordingly, if it is introduced to a hard segment, the heat resistance of the (meth)acrylic block copolymer (A) can be enhanced. For example, poly(methacrylic anhydride) has a glass transition temperature of 159°C. By introducing a unit constituting such polymers, the heat resistance of the (meth)acrylic block copolymer (A) can be enhanced.

The process for introducing the acid anhydride group is not particularly limited, but preferably, a precursor of the acid anhydride group is introduced to the (meth)acrylic block copolymer (A) and then cyclized. For example, it is preferable that an acrylic block copolymer (A') containing a precursor of the acid anhydride group having at least one unit expressed by general formula (2) be melt-kneaded at a temperature in the range of 180 to 300°C to cyclize the precursor, and thus the acid anhydride group is introduced. General formula (2) is:

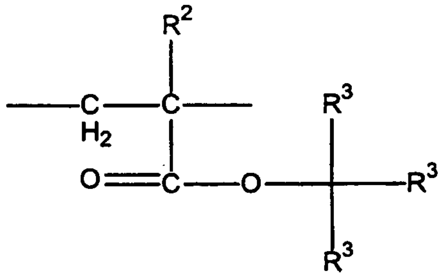

(2)

(wherein $R^2$ represents hydrogen or the methyl group; and $R^3$ each represent hydrogen, the methyl group, or the phenyl group and may be the same or different as long as at least one $R^3$ is the methyl group).

The unit expressed by general formula (2) can be introduced by copolymerizing an acrylic ester being the precursor or a methacrylic ester monomer.

The unit expressed by general formula (2) is separated from the adjacent ester unit and cyclized at a high temperature to form the acid anhydride group (refer to, for example, Hatada et al., J. M. S. -PURE APPL. CHEM., A30 (9 & 10), PP. 645-667 (1993)). This document describes that, in a polymer having β-hydrogen, the ester unit is generally decomposed at high temperature and is subsequently cyclized to form the acid anhydride group. By applying the process of this document, the acid anhydride group can be easily introduced to the (meth)acrylic block copolymer (A). Such

monomers include, but not particularly limited to, t-butyl acrylate, isopropyl acrylate, α, α-dimethylbenzyl acrylate, α-methylbenzyl acrylate, t-butyl methacrylate, isopropyl methacrylate, α, α-dimethylbenzyl methacrylate, and α-methylbenzyl methacrylate. Among these monomers, t-butyl acrylate and t-butyl methacrylate are preferable from the viewpoint of availability and eases of polymerization and acid anhydride group formation.

For the formation of the acid anhydride group, the acrylic block copolymer (A') containing a precursor of the acid anhydride group is heated at a high temperature, and preferably, but not limited to, a temperature in the range of 180 to 300°C. A temperature of lower than 180°C may not sufficiently produce the acid anhydride group, and a temperature of higher than 300°C may decompose the acrylic block copolymer (A') containing a precursor of the acid anhydride group. In a general process for introducing the acid anhydride group, the ester unit is partially decomposed at high temperature to form a carboxyl group, followed by cyclization to form the acid anhydride group. Accordingly, the carboxyl group may be partially left when the acid anhydride group is introduced.

<Process for preparing the acrylic block copolymer (A') containing a precursor of the acid anhydride group>

The process for preparing the acrylic block copolymer (A') containing a precursor of the acid anhydride group is not particularly limited, but preferably a controlled polymerization using a macromolecular initiator is applied. The controlled polymerization may be living anionic polymerization, radical polymerization using a chain transfer agent, or living radical polymerization which has recently been developed. Among these processes living radical polymerization is preferable from the viewpoint of controlling the molecular weight and structure of the acrylic copolymer.

In the living radical polymerization, the activity of the polymer ends is maintained, but not lost. While living polymerization refers to a polymerization in which the polymer ends constantly maintain activity in narrow definition, it generally includes quasi-living polymerization in which inactivated ends and activated ends are in equilibrium state. Living polymerization herein is defined by the latter. Various groups have recently been studying living radical polymerization actively.

Exemplary studies include: processes using a chain transfer agent, such as polysulfide, and using a radical scavenger, such as a cobalt-porphyrin complex (J. Am. Chem. Soc., 1994, Vol. 116, p. 7943) or a nitroxide compound (Macromolecules, 1994, Vol. 27, p. 7228) ; and atom transfer radical polymerization (ATRP) using an organic halogen compound as an initiator and a transition metal complex as a catalyst. Any one of these processes may be applied in the present invention. Preferably, ATRP is preferable from the viewpoint of ease of control.

In ATRP, an organic halogen compound or a sulfonyl halide is used as an initiator, and a metal complex having a Group 8, 9, 10, or 11 element as the central metal atom is used as a catalyst (refer to, for example, Matyjaszewski et al., J. Am. Chem. Soc., 1995, Vol. 117, p. 5614; Macromolecules, 1995, Vol. 28, p. 7901; Science, 1996, Vol. 272, p. 866; Sawamoto et al. , Macromolecules, 1995, Vol. 28, p. 1721).

In these methods, polymerization proceeds like living polymerization, termination reaction does not easily occur, a polymer having a narrow molecular-weight distribution (Mw/Mn of about 1.1 to 1.5) can be produced, and the molecular weight can be freely controlled by the monomer-initiator charge ratio, although they are radical polymerization in which the polymerization rate is high and the termination reaction due to coupling between radicals and the like easily occurs.

The organic halogen compound or sulfonyl halide used in the ATRP may be a monofunctional, bifunctional, or polyfunctional compound. A suitable compound can be selected from these compounds according to the purpose. However, a monofunctional compound is suitable for preparing a diblock copolymer from the viewpoint of availability of the initiator; a bifunctional compound is suitable for preparing x-y-x and y-x-y triblock copolymers from the viewpoint of the number of reaction steps and decrease in time; and a polyfunctional compound is suitable for preparing a branched block copolymer from the viewpoint of the number of reaction steps and decrease in time.

A macroinitiator may be used as the initiator. The macromolecular initiator refers to a polymer having a halogen atom at an end of its chain in organic halogen compounds and sulfonyl halide compounds. This macromolecular initiator can be prepared even by controlled polymerizations other than living radical polymerization. Thus, it can provide distinctively a block copolymer comprising polymers prepared by different polymerizations.

Exemplary monofunctional compounds are expressed by:

$C_6H_5$-$CH_2X$;

$C_6H_5$-C(H)(X)-$CH_3$;

$C_6H_5$-C(X)$(CH_3)_2$;

$R^4$-C(H)(X)-$COOR^5$;

$R^4$-C$(CH_3)$(X)-$COOR^5$;

$R^4$-C(H)(X)-CO-$R^5$;

$R^4$-C($CH_3$)(X)-CO-$R^5$;

and

$R^4$-$C_6H_4$-$SO_2$X.

In the formulas, $C_6H_5$ represents the phenyl group; $C_6H_4$, a phenylene group (any one of ortho-, meta-, and para-substitutions). $R^4$ represents hydrogen, an alkyl group having a carbon number in the range of 1 to 20, an aryl group having a carbon number in the range of 6 to 20, or an aralkyl group having a carbon number in the range of 7 to 20. X represents chlorine, bromine, or iodine. $R^5$ represents a monovalent organic group having a carbon number in the range of 1 to 20.

Exemplary alkyl groups (including alicyclic hydrocarbon groups) expressed by $R^4$ having a carbon number in the range of 1 to 20 include methyl, ethyl, propyl, isopropyl, n-butyl, isobutyl, t-butyl, n-pentyl, n-hexyl, cyclohexyl, n-heptyl, n-octyl, 2-ethylhexyl, nonyl, decyl, dodecyl, and isobornyl. Exemplary aryl groups having a carbon number in the range of 6 to 20 include phenyl, tolyl, and naphthyl. Exemplary aralkyl groups having a carbon number in the range of 7 to 20 include benzyl and phenethyl.

Exemplary monofunctional compounds specifically include tosyl bromide, methyl-2-bromopropionate, ethyl-2-bromopropionate, butyl-2-bromopropionate, methyl-2-bromoisobutyrate, ethyl-2-bromoisobutyrate, and butyl-2-bromoisobutyrate. Among these monofunctional compounds, ethyl-2-bromopropionate and butyl-2-bromopropionate are preferable from the viewpoint of ease of polymerization control because they have structures similar to those of acrylic ester monomers.

Exemplary bifunctional compounds are expressed by:

X-$CH_2$-$C_6H_4$-$CH_2$-X;

X-CH($CH_3$)-$C_6H_4$-CH($CH_3$)-X;

X-C($CH_3$)$_2$-$C_6H_4$-C($CH_3$)$_2$-X;

X-CH(COO$R^6$)-($CH_2$)$_n$-CH(COO$R^6$)-X;

X-C($CH_3$)(COO$R^6$)-($CH_2$)$_n$-C($CH_3$)(COO$R^6$)-X;

X-CH(CO$R^6$)-($CH_2$)$_n$-CH(CO$R^6$)-X;

X-C($CH_3$)(CO$R^6$)-($CH_2$)$_n$-C($CH_3$)(CO$R^6$)-X;

X-$CH_2$-CO-$CH_2$-X;

X-CH($CH_3$)-CO-CH($CH_3$)-X;

X-C($CH_3$)$_2$-CO-C($CH_3$)$_2$-X;

X-CH($C_6H_5$)-CO-CH($C_6H_5$)-X;

X-$CH_2$-COO-($CH_2$)$_n$-OCO-$CH_2$-X;

X-CH($CH_3$)-COO-($CH_2$)$_n$-OCO-CH($CH_3$)-X;

X-C($CH_3$)$_2$-COO-($CH_2$)$_n$-OCO-C($CH_3$)$_2$-X;

X-$CH_2$-CO-CO-$CH_2$-X;

X-CH ($CH_3$)-CO-CO-CH ($CH_3$)-X;

$X\text{-}C(CH_3)_2\text{-}CO\text{-}CO\text{-}C(CH_3)_2\text{-}X$;

$X\text{-}CH_2\text{-}COO\text{-}C_6H_4\text{-}OCO\text{-}CH_2\text{-}X$;

$X\text{-}CH(CH_3)\text{-}COO\text{-}C_6H_4\text{-}OCO\text{-}CH(CH_3)\text{-}X$;

$X\text{-}C(CH_3)_2\text{-}COO\text{-}C_6H_4\text{-}OCO\text{-}C(CH_3)_2\text{-}X$; and

$X\text{-}SO_2\text{-}C_6H_4\text{-}SO_2\text{-}X$.

$R^6$ represents an alkyl group having a carbon number in the range of 1 to 20, an aryl group having a carbon number in the range of 6 to 20, or an aralkyl group having a carbon number in the range of 7 to 20. n represents an integer in the range of 0 to 20. $C_6H_5$ , $C_6H_4$, and X are the same as above.

For $R^6$, exemplary alkyl groups having a carbon number in the range of 1 to 20, aryl groups having a carbon number in the range of 6 to 20, and aralkyl groups having a carbon number in the range of 7 to 20 are the same as above, and the description is omitted.

Exemplary bifunctional compounds include bis(bromomethyl)benzene, bis(1-bromoethyl)benzene, bis(1-bromoisopropyl)benzene, dimethyl 2,3-dibromosuccinate, diethyl 2,3-dibromosuccinate, dibutyl 2,3-dibromosuccinate, dimethyl 2,4-dibromoglutarate, diethyl 2,4-dibromoglutarate, dibutyl 2,4-dibromoglutarate, dimethyl 2,5-dibromoadipate, diethyl 2,5-dibromoadipate, dibutyl 2,5-dibromoadipate, dimethyl 2,6-dibromopimelate, diethyl 2,6-dibromopimelate, dibutyl 2,6-dibromopimelate, dimethyl 2,7-dibromosuberate, diethyl-2,7-dibromosuberate, and dibutyl-2,7-dibromosuberate. Among these bifunctional compounds, bis(bromomethyl)benzene, diethyl 2, 5-dibromoadipate, and diethyl 2,6-dibromopimelate are preferable from the viewpoint of the availability of raw materials.

Exemplary polyfunctional compounds are expressed by:

$C_6H_3\text{-}(CH_2\text{-}X)_3$;

$C_6H_3\text{-}(CH(CH_3)\text{-}X)_3$;

$C_6H_3\text{-}(C(CH_3)_2\text{-}X)_3$;

$C_6H_3\text{-}(OCO\text{-}CH_2\text{-}X)_3$;

$C_6H_3\text{-}(OCO\text{-}CH\ (CH_3)\ \text{-}X)_3$;

$C_6H\text{-}(OCO\text{-}C(CH_3)_2\text{-}X)_3$; and

$C_6H_3\text{-}(SO_2\text{-}X)_3$.

In the formulas, $C_6H_3$ is a trivalent phenyl group (any three of the 1- to 6-position may have substituents and X is the same as above.

Exemplary polyfunctional compounds include tris(bromomethyl)benzene, tris(1-bromoethyl)benzene, and tris (1-bromoisopropyl)benzene. Among these polyfunctional compounds, tris(bromomethyl)benzene is preferable from the viewpoint of availability.

If an organic halogen or a sulfonyl halide having another functional group in addition to the functional group for initiating the polymerization is used, a polymer having the functional group other than the reaction-initiating group at an end or in the molecule can be easily provided. Such functional groups other than the reaction-initiating group include alkenyl, hydroxyl, epoxy, amino, amide, silyl and so forth.

In the organic halogen or sulfonyl halide used as the initiator, the carbon bonding to the halogen group (halogen atom) has a carbonyl group, a phenyl group, or the like and, thus, the carbon-halogen bond is activated to initiate polymerization. The amount of the initiator is determined from the molar ratio to the monomer, according to the required molecular weight of the acrylic block copolymer. Specifically, the molecular weight of the acrylic block copolymer can be set according to how many molecules of the initiator are used for one molecule of the monomer.

Preferred transition metal complexes used as the catalyst for the ATRP include, but not particularly limited to, monovalent and non-valent copper complexes, bivalent ruthenium complexes, bivalent iron complexes, and bivalent nickel complexes.

Among these complexes, monovalent copper complexes are preferable from the viewpoint of costs and reaction control. Exemplary monovalent copper compounds include copper (I) chloride, copper (I) bromide, copper (I) iodide,

copper (I) cyanide, copper (I) oxide, and copper (I) perchlorate. Among these compounds, copper (I) chloride and copper (I) bromide are more preferable from the viewpoint of polymerization control. In use of a monovalent copper compound, 2,2'-bipyridyl and its derivatives (such as 4,4'-dinonyl-2,2'-bipyridyl and 4,4'-di(5-nonyl)-2,2'-bipyridyl); 1,10-phenanthroline and its derivatives (such as 4,7-dinonyl-1,10-phenanthroline and 5,6-dinonyl-1,10-phenanthroline), and polyamines such as tetramethyl diethylenetriamine (TMEDA), pentamethyl diethylenetriamine, and hexamethyl(2-aminoethyl)amine may be added as a ligand for enhancing catalytic activity.

A tristriphenylphosphine complex of bivalent ruthenium chloride ($RuCl_2(PPh_3)_3$) is also preferably used as the catalyst. In use of a ruthenium compound as the catalyst, an aluminium alkoxide may be added as an activator. In addition, a bistriphenylphosphine complex of bivalent iron ($FeCl_2(PPh_3)_2$), a bistriphenylphosphine complex of bivalent nickel ($NiCl_2 (PPh_3)_2$), and a bistributylphosphine complex of bivalent nickel ($NiBr_2(PBu_3)_2$) are also preferably used as the catalyst.

The types of the catalyst and the ligand to be used are not particularly limited, and can be appropriately selected according to the initiator, the monomer, and the catalyst and the required reaction speed. For example, for a polymerization of an acrylic monomer, such as an acrylic ester, it is preferable that the end of the macromolecular chain has a carbon-bromine bond from the viewpoint of polymerization control. Accordingly, the initiator is preferably an organic bromide or sulfonyl bromide; the solvent, acetonitrile; and the catalyst, a metal complex having copper of copper bromide, preferably, copper (I) bromide, as the central metal and pentamethyldiethylenetriamine or the like as the ligand. For a polymerization of a methacrylic monomer, such as an acrylic ester, it is preferable that the propagation end of the macromolecular chain has a carbon-chlorine bond from the viewpoint of polymerization control. Accordingly, the initiator is preferably an organic chloride or sulfonyl chloride; the solvent, acetonitrile or its mixture with toluene or the like if necessary; and the catalyst, a metal complex having copper of copper chloride, preferably, copper (I) chloride, as the central metal atom and pentamethyldiethylenetriamine or the like as the ligand.

The amount of the catalyst and the ligand to be used can be appropriately set according to the relationship among the amounts of initiator, monomer, and solvent and the required reaction speed. For example, in preparation of a polymer having a high molecular weight, which requires an initiator/monomer ratio lower than that in preparation of a polymer having a low molecular weight, the amounts of catalyst and ligand may be set large to increase the reaction speed. In preparation of a polymer having a glass transition temperature over room temperature, if an appropriate organic solvent is added to reduce the viscosity so as to increase stirring efficiency, the reaction speed tends to decrease. In such cases, the amount of catalyst and ligand may be set large to increase the reaction speed.

The above-described ATRP can be performed without any solvent (bulk polymerization) or in various types of solvent. This polymerization using or not using a solvent can be terminated in midstream. The solvent may be a hydrocarbon, an ether, a halogenated hydrocarbon, a ketone, an alcohol, a nitrile, an ester, a carbonate, and so forth.

Exemplary hydrocarbon solvents include benzene and toluene. Exemplary ether solvents include diethyl ether and tetrahydrofuran. Exemplary halogenated hydrocarbon solvents include methylene chloride and chloroform. Exemplary ketone solvents include acetone, methyl ethyl ketone, and methyl isobutyl ketone. Exemplary alcohol solvents include methanol, ethanol, propanol, isopropanol, n-butanol, and t-butanol. Exemplary nitrile solvents include acetonitrile, propionitrile, and benzonitrile. Exemplary ester solvents include ethyl acetate and butyl acetate. Exemplary carbonate solvents include ethylene carbonate and propylene carbonate. At least one of these solvents may be used.

If a solvent is used, the amount of the solvent can be set according to the relationship between the viscosity of the entire system and the required stirring efficiency. If bulk polymerization or polymerization using a solvent is terminated in midstream, the conversion rate of the monomer at the suspended point can be set according to the relationship between the viscosity of the entire system and the required stirring efficiency.

The polymerization is performed at a temperature in the range of 23 to 200°C, and preferably in the range of 50 to 150°C. For preparing the acrylic block copolymer by the above-described polymerization, monomers may be added one after another; a block may be polymerized using a previously synthesized polymer as a macroinitiator; or separately prepared polymers may be subjected to reaction to be combined with each other. Any one of these processes may be applied, and a suitable process may be selected according to the purpose. The process in which monomers are added one after another is preferable in view of ease of the production process. If a remaining monomer of the block in a previous step is need to be prevented from copolymerizing with the block in the subsequent step, preferably, the previously synthesized polymer is used as macroinitiator to polymerize the subsequent block.

The processes will be described in detail in which monomers are added one after another and in which a block is polymerized using a previously synthesized polymer as a macromolecular initiator, but the process for preparing the acrylic block copolymer of the present invention is not limited to these processes.

In the process of adding monomers one after another, preferably, a monomer to be polymerized in a subsequent step is added at a point where the conversion rate of the previously added monomer is in the range of 80% to 95%. If the polymerization is progressed to a conversion rate of more than 95% (for example, 96% to 100%), the propagation reaction of the macromolecule is stochastically inhibited. In addition, macromolecular radicals become liable to react with each other and, thus, a side reaction, such as disproportionation, coupling, or chain transfer, tends to occur easily.

If a monomer is added at a point where the conversion rate is less than 80% (for example, 79% or less), the previously added monomer is mixed with the monomer for the subsequent step and may be undesirably copolymerized.

As for the order of monomer addition in this process, first an acrylic monomer is charged to polymerize, and then a methacrylic monomer is charged to polymerize; or first a methacrylic monomer is charged to polymerize, and then an acrylic monomer is charged to polymerize. Preferably, an acrylic monomer is charged to polymerize, and a methacrylic monomer is subsequently charged to polymerize from the viewpoint of polymerization control. This is because it is preferable to grow the methacrylic polymer block from the end of the acrylic polymer block.

In the process of polymerizing a subsequent block using a previously synthesized polymer as an initiator, for example, the temperature of a first block in a living state is once lowered at a desired point to suspend the polymerization, followed by evaporating the first block monomer under reduced pressure, and then a subsequent block monomer is added. If a third block and its subsequent blocks are polymerized, steps similar to that for the second block can be performed. In this process, a remaining block monomer in a previous step can be prevented from being copolymerized during polymerization of the second block or its subsequent blocks.

As for the order of block polymerization in this process, first an acrylic block is polymerized, and then a methacrylic block is polymerized; or first a methacrylic block is polymerized, and then an acrylic block is polymerized. Preferably, an acrylic block is polymerized, and a methacrylic monomer is subsequently polymerized from the viewpoint of polymerization control. This is because it is preferable to grow the methacrylic polymer block from the end of the acrylic polymer block.

How the conversion rates of the acrylic monomer and the methacrylic monomer are derived will now be explained. For determining the conversion rate, gas chromatography (GC), a gravimetric method and so forth may be applied. In GC method, reaction liquid samples of a polymerization system, taken on an as-needed basis before starting the reaction and during the reaction are subjected to GC, and the consumption rate of a monomer is obtained from the abundance ratio of the monomer to the reference material previously added to the polymerization system. This method can advantageously provide conversion rates of a plurality of monomers in a system separately. In the gravimetric method, the reaction liquid of a polymerization system is sampled to weigh before and after drying to obtain the solid content, and, thus, the conversion rate of total monomers is derived. This method can easily provide a conversion rate advantageously. For a system containing a plurality of monomers, for example, a methacrylic monomer and an acrylic monomer copolymerized with the methacrylic monomer, GC is preferably applied.

The reaction liquid prepared by polymerization contains a mixture of a polymer and a metal complex. In order to yield an acrylic block copolymer resin solution, an organic acid containing the carboxy group or the sulfonic group is added to produce a metal complex and a metal salt, and filtered to remove the solid content. Then, impurities in the solution, such as an acid, are removed by adsorption with basic activated alumina, a basic adsorbent, a solid inorganic acid, an anion-exchange resin, or a cellulose anion exchanger.

The resulting polymer solution is subsequently subjected to evaporation to remove the polymerization solvent and the unreacted monomers, thereby isolating the acrylic block copolymer. The evaporation may be performed by thin-film evaporation, flash evaporation, transverse evaporation with an extrusion screw, and so forth. Among these evaporations, transverse evaporation with an extrusion screw can be efficient by itself or in combination with another evaporation because the acrylic block copolymer is viscous.

<Process for preparing (meth)acrylic block copolymer (A)>

For the preparation of the (meth)acrylic block copolymer (A), the acrylic block copolymer (A') containing a precursor of the acid anhydride group prepared as above is preferably heated at a high temperature in the range of 180 to 300°C. In this instance, the acrylic block copolymer (A') containing a precursor of the acid anhydride group may be heated in a state of a polymer solution under an increased pressure, heated while the solvent is evaporated to remove from the polymer solution, or heated directly to melt. Preferably, it is directly heated to melt from the viewpoint of reactivity to the acid anhydride group and ease of preparation. More preferably, the acrylic block copolymer (A') containing a precursor of the acid anhydride group is melt-kneaded.

For heating the acrylic block copolymer (A') containing a precursor of the acid anhydride group in a polymer solution, a pressure-resistant reactor may be used. For heating the acrylic block copolymer (A') containing a precursor of the acid anhydride group while the solvent is evaporated to remove from the polymer solution, transverse evaporation with an extrusion screw can be applied.

For directly heating the acrylic block copolymer (A') containing a precursor of the acid anhydride group, a pressing machine, an injection molding machine and so forth can be used.

For melt-kneading the acrylic block copolymer (A') containing a precursor of the acid anhydride group, various machine capable of heating and kneading at one time can be used. For example, a Banbury mixer, a kneader, and a single or multi screw extruder that are commonly used in rubber processing may be used. Preferably, an extruder is used from the viewpoint of reactivity to the acid anhydride group and ease of preparation, but the machine is not limited

to this. In the melt-kneading the acrylic block copolymer (A') containing a precursor of the acid anhydride group, the time of melt-kneading (residence time in the extruder if an extruder is used) is appropriately set according to melt-kneading temperature, the structure of the screw, the L/D ratio (ratio of the effective length L of the screw to the diameter D of the screw), the number of revolutions of the screw and so forth.

<Compound (B) containing at least two amino groups in its molecule>

The compound (B) containing at least two amino acid groups in its molecule, used as a crosslinker is not particularly limited as long as it contains at least two primary or secondary amino groups in its molecule. However, it preferably contains a primary amino group from the viewpoint of reactivity with the acid anhydride group, and it is preferably a diamine having a primary amino group. Exemplary compounds (B) containing at least two amino groups in its molecule include aliphatic polyamines, such as ethylenediamine, diethylenetriamine, triethylenetetramine, tetraethylenepentamine pentaethylenehexamine, tetramethylenediamine, pentamethylenediamine, hexamethylenediamine, trimethylhexamethylenediamine, dodecamethylenediamine, polyoxypropylenepolyamine, 1,2-diaminopropane, bis(hexamethylene)triamine, tris(2-aminoethyl)amine, N,N'-dimethylethylenediamine, N,N'-diethyl-1,3-propanediamine, N,N'-dibutyl-1,6-hexadiamine, N,N'-diethyl-2-butene-1,4-diamine, N,N'-diethyl-1,4-diaminocyclohexane, and polyether polyamines having a molecular weight in the range of 200 to 1,000 (for example, polyoxypropylenediamine with an amino group at both ends); alicyclic polyamines, such as cyclohexylenediamine, piperazine, isophoronediamine, 1,3-bisaminomethylcyclohexane, 1,4-bisaminopropylpiperazine, 1,3-bisaminocyclohexane, di(aminodicyclohexyl)methane, 3,3'-dimethyldi(aminocyclohexyl)methane, 1-cyclohexylamino-3-aminopropane, 1,4-diaminocyclohexane, 1,4-diaminocyclopentane, di(aminocyclohexyl)methane, di(aminocyclohexyl)sulfone, 1,3-di(aminocyclohexyl)propane, 4-isopropyl-1,2-diaminocyclohexane, 2,4-diaminocyclohexane, N,N'-diethyl-1,4-diaminocyclohexane, 3,3'-dimethyl-4,4'-diaminodicyclohexylmethane, and 3-aminomethyl-3,3,5-trimethylcyclohexylamine; and aromatic polyamines, such as melamine, benzidine, o-phenylenediamine, m-phenylenediamine, p-phenylenediamine, 4,4'-diaminodiphenylmethane, 4,4'-diaminodiphenylsulfone, 4,4'-diaminodiphenyl ether, 2,4-diaminodiphenylamine, 1,5-diaminonaphthalene, 1,8-diaminonaphthalene, and 2,4-diaminotoluene.

At least one of these compounds is used. In particular, preferred compounds have a boiling point of 100°C or more, and more preferably 150°C or more, from the viewpoint of availability, costs, and handling for reaction. In addition, the compound preferably has superior compatibility with the (meth)acrylic block copolymer (A).

The number of amino groups of the compound (B) containing at least two amino groups in its molecule can be set according to the balance between the hardness and mechanical strength of the resulting elastomer and the compression set properties. As for the content of the compound (B), the molar ratio of the amino groups in the compound (B) to the acid anhydride group in the (meth)acrylic copolymer (A) is preferably in the range of 0.01 to 10, and more preferably in the range of 0.05 to 10. A content of higher than 10 of the compound (B) containing at least two amino group in its molecule reduces the mechanical strength of the resulting elastomer, and a content of lower than 0.01 degrades the crosslinking reactivity of the resulting elastomer.

<Thermoplastic resin (C)>

Exemplary thermoplastic resins (C) used in the present invention include, but not particularly limited to, polyvinyl chloride-based resins, polyethylene-based resins, polypropylene-based resins, cyclic olefin copolymer resins, polymethylmethacrylate-based resins, polystyrene-based resins, polyphenyleneether-based resins, polycarbonate-based resins, polyester-based resins, polyamide-based resins, polyacetal resins, polyphenylenesulfide resins, polysulfone resins, polyimide resins, polyetherimide resins, polyetherketone resins, polyetheretherketone resins, polyamideimide resins, and a homopolymer or a copolymer prepared by polymerizing 70 to 100 percent by weight of at least one vinyl monomer selected from the group consisting of aromatic alkenyl compounds, vinyl cyanides, and (meth) acrylates with 30 to 0 percent by weight of other vinyl monomers copolymerizable with the former vinyl monomers, such as ethylene, propylene, and vinyl acetate. At least one of these thermoplastic resins is used.

More specifically, the poly(vinyl chloride)-based resins include poly(vinyl chloride) homopolymers with various polymerization degrees, vinyl chloride copolymers, such as vinyl chloride-vinyl acetate copolymers, vinyl chloride-vinyl acetate-maleic anhydride copolymers, vinyl chloride-ethylene copolymers, and vinyl chloride-propylene copolymers; poly(vinyl chloride) alloys, such as those of poly(vinyl chloride) and ethylene-vinyl acetate copolymer, poly(vinyl chloride) and chlorinated polyethylene, poly(vinyl chloride) and acrylic copolymer, and poly(vinyl chloride) and polyurethane; functionalized poly(vinyl chloride), such as poly(vinyl chloride)/filler complexes and chlorinated poly(vinyl chloride); poly (vinylidenechloride) homopolymers; poly(vinylidenechloride) copolymers, such as vinylidenechloride-vinylchloride copolymers, vinylidene chloride-acrylonitrile copolymers, and vinylidene chloride-acrylate copolymers.

The polyethylene-based resins include polyethylene resins, such as low-density polyethylene, high-density polyethylene, linear low-density polyethylene, and ultra high molecular weight polyethylene; and copolymers of ethylene

and a polar monomer, such as ethylene-vinylacetate copolymers, ethylene-methylacrylate copolymers, ethylene-ethylacrylate copolymers, ethylene-methyl methacrylate copolymers, ethylene-ethyl acrylate-glycidylmethacrylate copolymers, ethylene-vinyl acetate-glycidylmethacrylate copolymers, ethylene-acrylic acid copolymers, ethylene-acrylic acid metal salt or -methacrylic acid metal salt copolymers, maleic anhydride-modified polyethylene, maleic anhydride-modified ethylene-ethylacrylate copolymers, ethylene-dimethylaminomethylmethacrylate copolymers, ethylene-vinylalcohol copolymers, and ethylene-vinylalcohol adduct with ethylene oxide.

The polypropylene-based resins include polypropylenes, such as homoisotactic polypropylene, isotactic polypropylene random copolymers containing ethylene or 1-butene, isotactic polypropylene block copolymers containing ethylenepropylene, Ziegler-Natta catalyst-based isotactic polypropylene, metallocene catalyst-based isotactic polypropylene, metallocene catalyst-based syndiotactic polypropylene, and atactic polypropylene; and functionalized polypropylenes, such as polypropylene/filler complex, chlorinated polypropylene, and maleic acid-modified polypropylene.

The cyclic olefin copolymer resin is not particularly limited as long as it contains a cyclic olefin, such as cyclopentadiene. For example, it may be ARTON (produced by JSR Corporation), ZEONEX (produced by Nippon Zeon Co., Ltd.), or copolymers of cyclic olefins with ethylene or polypropylene.

The poly(methyl methacrylate)-based resin is not particularly limited as long as it principally contains methyl methacrylate, and may be a poly(methyl methacrylate) resin copolymerized with $\alpha$-methylstyrene, maleic anhydride, or the like.

The polystyrene-based resins include polystyrene homopolymers and syndiotactic polystyrene.

The homopolymer or copolymer prepared by polymerizing 70 to 100 percent by weight of at least one vinyl monomer selected from the group consisting of aromatic alkenyl compounds, vinyl cyanides, and (meth) acrylates with 30 to 0 percent by weight of other vinyl monomers copolymerizable with the other vinyl monomers, such as ethylene, propylene, and vinyl acetate may be an acrylonitrile-styrene-based copolymer resin, such as acrylonitrile-styrene copolymer resin, acrylonitrile-butyl acrylate-styrene copolymer, acrylonitrile-ethylenepropylene-styrene copolymer, or acrylonitrile-chlorinated polyethylene-styrene copolymer; or a methylmethacrylate-styrene copolymer resin.

The polyphenylene ether-based resins include polyphenylene ether homopolymers; and polyphenylene ether alloys, such as those of polyphenylene ether and polystyrene, polyphenylene ether and polyamide, and polyphenylene ether and polybutylene terephthalate.

The polycarbonate-based resins include polycarbonates, such as bisphenol A-type aromatic polycarbonate; and polycarbonate alloys, such as those of polycarbonate and poly(butylene terephthalate), polycarbonate and polyacrylate, and polycarbonate and poly(methyl methacrylate).

The polyester-based resins include aliphatic polyesters, such as polyglycolic acid, polylactic acid, polycaprolactone, and poly(ethylene succinate) ; semi-aromatic polyesters, such as poly(ethylene terephthalate), poly(trimethylene terephthalate), poly(butylene terephthalate), poly(ethylene naphthalate), poly(cyclohexanedimethylene terephthalate), ethylene terephthalate/cyclohexanedimethylene terephthalate copolymers, and thermotropic liquid crystal polymer type 2; and fully aromatic polyesters, such as amorphous polyarylate, thermotropic liquid crystal polymer type 1, and thermotropic liquid crystal polymer type 2.

The polyamide-based resins include ring-opening polymerized aliphatic polyamides, such as PA6 (polycaproamide) and PA12 (polydodecaneamide); polycondensed polyamides, such as PA66 (polyhexamethyleneadipamide), PA46 (polytetramethyleneadipamide), PA610, PA612, and PA11; semi-aromatic polyamides, such as MXD6, PA6T, PA9T, PA6T/66, PA6T/6, and amorphous PA; fully aromatic polyamides, such as poly(p-phenyleneterephthalamide), poly(m-phenyleneterephthalamide), and poly(m-phenyleneisophthalamide); and amide elastomers.

The polyacetal resins include polyacetal homopolymers and copolymers of formaldehyde and trioxane. The thermoplastic resin (C) used in the present invention is not limited to these materials, and various types of thermoplastic reins may be used, including thermoplastic elastomers, such as styrene elastomers, olefin elastomers, vinylchloride elastomers, and urethane elastomers.

In these various types of thermoplastic resin, resins having a softening temperature of 100°C or more and a melting temperature of 300°C or less are preferable. Among these are poly (methylmethacrylate) -based resins, polyolef in-based resins, polyester-based resins, polyamide-based resins, and polycarbonate-based resins, and preferably polyester-based resins and polyamide-base resins from the viewpoint of the compatibility with the (meth) acrylic block copolymer (A) and the oil-resistance and heat-resistance of the resulting thermoplastic elastomer. In particular, polyamide resins having reactivity with the acid anhydride group (a1), such as PA6 (polycaproamide), PA12 (polydodecaneamide), and PA612, are preferable from the viewpoint of the compatibility with the (meth)acrylic block copolymer (A).

The thermoplastic resin (C) content is preferably in the range of 5 to 150 parts by weight, and more preferably in the rang of 10 to 100 parts by weight, relative to 100 parts by weight of the (meth)acrylic block copolymer (A). A thermoplastic resin (C) content of more than 150 parts by weight may degrade the rubber elasticity of the resulting thermoplastic elastomer. A thermoplastic resin (C) content of less than 5 parts by weight may degrade the formability or mechanical strength of the resulting thermoplastic elastomer.

<Softening agent (D)>

The thermoplastic elastomer composition of the present invention may contain various types of softening agents in order to reduce the hardness and increase the elongation of the thermoplastic elastomer composition. Also use of a softening agent can increase the elongation of the cured material in combination with a filler which is described later, and allows a large amount of filler to be mixed. It is therefore preferable to add the softening agent.

Exemplary softening agents include, but not particularly limited to, plasticizers commonly used in thermoplastic resins and rubber; softeners, such as process oil; oligomers; oil and fat of animals and vegetables; and petroleum fraction compounds, such as kerosene, light oil, heavy oil, and naphtha. The softeners may be a process oil. More specifically, the process oil may be a petrolic process oil, such as paraffin oil, naphthenic process oil, or aromatic process oil. The plasticizers include phthalic acid derivatives, such as dimethyl phthalate, diethyl phthalate, di-n-butyl phthalate, di-(2-ethylhexyl) phthalate, diheptyl phthalate, diisodecyl phthalate, di-n-octyl phthalate, diisononyl phthalate, ditridecyl phthalate, octyldecyl phthalate, butylbenzyl phthalate, dicyclohexyl phthalate, and β-hydroxyethyl-2-ethylhexyl phthalate; isophthalic acid derivatives, such as dimethyl isophthalate; tetrahydrophthalic acid derivatives, such as di-(2-ethylhexyl) tetrahydrophthalate; adipic acid derivatives, such dimethyl adipate, dibutyl adipate, di-n-hexyl adipate, di- (2-ethylhexyl) adipate, isononyl adipate, di-isodecyl adipate, and dibutyldiglycol adipate; azelaic acid derivatives, such as di-2-ethylhexyl azelate; sebacic acid derivatives, such as dibutyl sebacate; dodecane-2-acid derivatives; maleic acid derivatives, such as dibutyl maleate and di-2-ethylhexyl maleate; fumaric acid derivatives, such as dibutyl fumarate; hydroxybenzoates, such as 2-ethylhexyl o- or p-hydroxybenzoate, hexyldecyl o- or p-hydroxybenzoate, ethyldecyl o- or p-hydroxybenzoate, octyloctyl o- or p-hydroxybenzoate, decyldodecyl o- or p-hydroxybenzoate, methyl o- or p-hydroxybenzoate, butyl o- or p-hydroxybenzoate, hexyl o- or p-hydroxybenzoate, n-octyl o- or p-hydroxybenzoate, decyl o- or p-hydroxybenzoate, and dodecyl o- or p-hydroxybenzoate; trimellitic acid derivatives, such as tris-2-ethylhexyl trimellitate; pyromellitic acid derivatives; citric acid derivatives, such as acetyltributyl citrate; itaconic acid derivatives; oleic acid derivatives; ricinoleic acid derivatives; stearic acid derivatives; other fatty acid derivatives; sulfonic acid derivatives; phosphoric acid derivatives; glutaric acid derivatives; polyester-based plasticizers being polymers of a dibasic acid, such as adipic acid, azelaic acid, or phthalic acid, and glycol, monohydric alcohol or the like; glycol derivatives; glycerin derivatives; paraffin derivatives, such as chlorinated paraffin; epoxy derivatives; polyester-based polymer plasticizers; polyether-based polymer plasticizers; carbonate derivatives, such as ethylene carbonate and propylene carbonate; benzenesulfonic acid alkylamides, such as benzenesulfonic acid propylamide, benzenesulfonic acid butylamide, and benzenesulfonic acid 2-ethylhexylamide; toluenesulfonic acid alkylamides, such as N-ethyl-o- or N-ethyl-p-toluenesulfonic acid butylamide and N-ethyl-o- or N-ethyl-p-toluenesulfonic acid 2-ethylhexylamide; vinyl polymers prepared from vinyl monomers by various polymerization processes, such as acrylic plasticizers. In the present invention, the plasticizer is not limited to these, and various plasticizer may be used, including widely commercially available plasticizers for rubber and thermoplastic resin. Commercially available plasticizers include Thiokol TP (produced by Morton), ADEKA CIZER O-130P, C-79, UL-100, P-200, RS-735 (produced by Asahi Denka Co., Ltd), SANSO CIZER N-400 (produced by New Japan Chemical Co., Ltd.), BM-4 (produced by Daihachi Chemical Industry Co., Ltd.), EHPB (produced by Ueno Seiyaku Co.,Ltd.), and Exceparl (produced by Kao Corporation), UP-1000 (produced by Toagosei Co., Ltd.). Exemplary vegetable oils include ricinus oil, cottonseed oil, linseed oil, rape-seed oil, soybean oil, palm oil, coconut oil, peanut oil, pine oil, and tall oil.

Preferably, a softening agent is selected from above which has superior compatibility with the (meth)acrylic block copolymer (A) and the thermoplastic resin (C) . Preferred agents are low-volatile plasticizers whose weight is not reduced by heating, and they include, but not particularly limited to, adipic acid derivatives, phthalic acid derivatives, glutaric acid derivatives, trimellitic acid derivatives, pyromellitic acid derivatives, polyester-based plasticizers, glycerin derivatives, and epoxy derivative polyester polymer plasticizers; polyether-based polymer plasticizers, vinyl polymers prepared by polymerizing vinyl monomers, such as acrylic plasticizers, hydroxybenzoates, benzenesulfonic acid alkylamides, and toluenesulfonic acid alkylamides, and other macromolecular plasticizers. For example, if a polyamide resin is used as the thermoplastic resin (C), phthalic acid derivatives, hydroxybenzoates, benzenesulfonic acid alkylamides, and toluenesulfonic acid alkylamides are preferably used from the viewpoint of controlling the flexibility and hardness of the resulting thermoplastic elastomer and of the oil resistance and the heat resistance.

The above-enumerated softening agents may be used singly or in combination. Preferably, the softening agent (D) content is preferably in the range of 1 to 300 parts by weight, more preferably in the range of 1 to 200 parts by weight, and still more preferably in the range of 5 to 100 parts by weight relative to 100 parts by weight of the (meth) acrylic block copolymer (A) . A content of more than 300 parts by weight may degrade the heat resistance or mechanical strength of the resulting thermoplastic elastomer.

The thermoplastic elastomer composition of the present invention may further contain a stabilizer, a lubricant, a fire retardant, a pigment, a filler, a reinforcer, a tackifier and so forth if necessary, in addition to the (meth)acrylic block copolymer (A), the compound (B) containing at least two amino groups in its molecule, the thermoplastic resin (C), and the softening agent (D) . More specifically, those additives include stabilizers, such as hindered phenol, hindered amine, and dibutyltin maleate; lubricants, such as polyethylene wax, polypropylene wax, and montan wax; fire retardants, such

as decabromobiphenyl and decabromobiphenyl ether; pigments, such as titanium oxide, zinc sulfide, and zinc oxide; fillers and reinforcers, such as carbon black, silica, glass fiber, asbestos, wollastonite, mica, talc, calcium carbonate; and tackifiers, such as coumarone indene resin, phenol resin, terpene resin, high styrene resin, petroleum hydrocarbons (for example, dicyclopentadiene resin, alicyclic hydrocarbon resin, and unsaturated hydrocarbon resin), polybutene, rosin derivatives.

Furthermore, various types of graft polymers or block polymers may be added as a compatibilizer to further enhance the compatibility between the (meth) acrylic block copolymer (A) and the thermoplastic resin (C). Commercially available compatibilizers include Kraton Series (produced by Shell Japan), Tuftec Series (produced by Asahi Kasei Chemicals), Dynaron (produced by JSR), Epofriend (produced by Daicel Chemical Industries), Septon (produced by Kuraray), Nofalloy (Produced by NOF Corporation), Rexpearl (produced by Japan polyolefins), Bondfast (produced by Sumitomo Chemical), Bondine (produced by Sumitomo Chemical), Admer (produced by Mitsui Chemicals), Youmex (produced by Sanyo Chemical Industries), VMX (produced by Mitsubishi Chemical), Modiper (Produced by NOF Corporation), Staphyloid (produced by Takeda Pharmaceutical Co.,Ltd.), Kane Ace (produced by Kaneka), and Rezeta (produced by Toagosei) . A appropriate compatibilizer is selected from these according to the (meth) acrylic block copolymer (A) and the thermoplastic resin (C) used.

<Process for preparing the thermoplastic elastomer composition>

The thermoplastic elastomer composition of the present invention is produced by substantial reaction of a composition comprising the (meth)acrylic block copolymer (A) and the thermoplastic resin (C) with the compound (B) containing at least two amino groups in its molecule. It is not particularly limited, but preferably the compound (B) containing at least two amino groups in its molecule is added(dynamically vulcanized) to the composition comprising the (meth) acrylic block copolymer (A) and the thermoplastic resin (C) while the composition is melt-kneaded at a high temperature. In addition, other constituents, such as softening agents (D), stabilizers, lubricants, fire retardants, pigments, fillers, reinforcers, and tackifiers, are added if necessary.

Various types of machine capable of heating and kneading at one time can be used as the kneader for preparing the composition. For example, a Banbury mixer, a kneader, and a single or multi screw extruder that are commonly used in rubber processing may be used. Furthermore, the composition may be subjected to forming with a pressing machine or an injection molding machine, if necessary. The kneading temperature in the preparation is preferably in the range of 100 to 300°C, more preferably in the range of 150 to 250°C.

Best Mode for Carrying Out the Invention

The present invention will be further described in detail using examples, but the present invention is not limited to the examples.

In the examples, BA, EA, MEA, MMA, TBMA, TBA represent butyl acrylate, ethyl acrylate, methoxyethyl acrylate, methyl methacrylate, t-butyl methacrylate, and t-butyl acrylate, respectively.

<Test process>

(Molecular weight)

Molecular weights shown in the examples were determined in terms of polystyrene by GPC with the following GPC analyzer with a polystyrene column using chloroform as the eluent. The GPC was performed with a GPC analyzer (system: GPC system produced by Waters, column: Shodex K-804 (polystyrene gel) produced by Showa Denko) . Chloroform was used as the eluent, and molecules were determined in terms of polystyrene.

(Analysis of acid anhydride group conversion)

The conversion to the acid anhydride group of the acrylic block copolymer was confirmed by infrared spectroscopy (FTIR-8100 produced by Shimadzu Corporation) and nuclear magnetic resonance analysis (AM400 produced by BRUKER). Deuterochloroform was used as the solvent for the nuclear magnetic resonance analysis.

(Hardness)

Hardness (JIS A or JIS D) at 23°C was measured in accordance with JIS K 6301.

(Mechanical strength)

Mechanical strength was measured with an autograph AG-10TB produced by Shimadzu Corporation in accordance with JIS K 7113. The measurement was performed with n = 3, and strength (MPa) at break, elongation (%)at break, and elastic modulus (MPa) were averaged. The test pieces were in the form of No. 2 (1/3) with a thickness of about 2 mm. The test was performed at 23°C, at a test speed of 500 mm/min. The test pieces had been conditioned at a temperature of 23 ± 2°C and a relative humidity of 50 ± 5% for 48 hours before the test.

(Oil resistance)

The molding specimen of the composition was immersed in ASTM oil No. 3 maintained at 150°C for 72 hours, and thus the change in weight was measured in accordance with ASTM D638. The appearance after the test was visually evaluated by comparing the shapes before and after the test. Samples whose shape was maintained were determined to be good; and deformed samples, bad.

(Heat resistance)

Flow beginning temperatures were compared. Flow beginning temperature was defined as the temperature (represented by Tfb in this measurement) at which the resin extrusion piston obviously started falling when the resin heated at a temperature rise rate of 5°C/min with a flow tester CFT-500C, produced by Shimadzu Corporation, was extruded from a nozzle having an inner diameter of 1 mm and a length of 10 mm at a load of 60 $kgf/cm^2$.

(Insoluble content (percent by weight))

For the insoluble content (percent by weight), 1 g of a sample (Wu) wrapped with a 100-mesh wire sheet was immersed in toluene of 60°C or acetone of 50°C for 24 hours. After the constituents soluble in the solvent were separated, the residue was vacuum-dried at 60°C and the weight (Wc, g) after drying was measured. The isolation content was obtained from the ratio of the residue weight (Wc) to 1 g of the sample (Wu). The insoluble content (percent by weight) shows reaction progress.

Preparation Example 1

Synthesis of (MMA-co-TBMA)-b-BA-b-(MMA-co-TBMA) acrylic block copolymer (hereinafter expressed by 20TBA7), wherein MMA/TBMA = 80/20 mol% and BA/(MMA-co-TBMA) = 70/30 wt%

In a polymerization vessel being a 5L separable flask whose inside air was replaced with nitrogen, 11. 3 g (78.5mmol) of copper bromide was placed, and 180 mL of acetonitrile (bubbled with nitrogen) was added. After heating and stirring at 70°C for 30 minutes, added were 5.65 g (15.7 mmol) of initiator diethyl 2,5-dibromoadipate and 900 mL (6.28 mol) of BA. The materials were heated and stirred at 85°C, and 1.64 mL (7.85 mmol) of ligand diethylenetriamine was added to start polymerization.

From the polymerization solution, about 0.2 mL of sample solution was taken out at constant time intervals, and the sample solutions were subjected to gas chromatography to determine the conversion rate of the BA. The polymerization speed was controlled by appropriately adding triamine. When the conversion rate of the BA reached 95%, added were 151.9 mL (0.94 mol) of TBMA, 400.9 mL (3.77 mol) of MMA, 7.77 g (78.5 mmol) of copper chloride, 1.64 mL (7.85 mmol) of diethylenetriamine, and 1093 mL of toluene (bubbled with nitrogen). The conversion rates of the TBMA and the MMA were determined in the same manner. When the conversion rates of the TBMA and the MMA reached 70% and 64% respectively, 1500 mL of toluene was added, and the reactor was cooled in a water bath to terminate the reaction.

The reacted solution was diluted with 2.0 L of toluene, and 17.9 g of p-toluenesulfonic acid monohydrate was added, followed by stirring at room temperature for 3 hours. To the polymer solution, 12.0 g of adsorbent Kyowaad 500SH (produced by Kyowa Chemical Industry) was added and stirred at room temperature for another 3 hours. The adsorbent was filtered with a Kiriyama funnel to yield a transparent and colorless polymer solution. The solution was dried to remove the solvents and residual monomers to yield a targeted acrylic block copolymer 20TBA7.

The resulting acrylic block copolymer 20TBA7 was subjected to GPC analysis to obtain a number average molecular weight Mn of 122,858 and a molecular weight distribution Mw/Mn of 1.46.

Preparation Example 2

Synthesis of (MMA-co-TBMA)-b-(BA-co-EA-co-MEA)-b-(MMA-co-TBMA) acrylic block copolymer (hereinafter expressed by 20T3A7), wherein MMA/TBMA = 80/20 mol% and (BA-co-EA-co-MEA)/(MMA-co-TBMA) = 70/30 wt%.

In a polymerization vessel being a 5L separable flask whose inside air was replaced with nitrogen, 11. 7g (81.9 mmol) of copper bromide was placed, and 180 mL of acetonitrile (bubbled with nitrogen) was added. After heating and stirring at 70°C for 30 minutes, added were 5.89g (16.4 mmol) of initiator diethyl 2,5-dibromoadipate and 362 mL (252 mol) of BA, 344 mL (3.17 mol) of EA, and 195 mL (1.51 mol) of MEA. The materials were heated and stirred at 85°C, and 1.71 mL (8.2 mmol) of ligand diethylenetriamine was added to start polymerization. When the conversion rates of the BA, the EA, and the MEA reached 95%, 95%, and 97% respectively, added were 158 mL (0.98 mol) of TBMA and 418 mL (3.92 mol) of MMA. When the conversion rates of the TBMA and the MMA reached 64% and 59% respectively, the reaction was terminated. The other process steps were conducted as in Preparation Example 1 and, thus, the targeted acrylic block copolymer 20T3A7 was yielded.

The resulting acrylic block copolymer 20T3A7 was subjected to GPC analysis to obtain a number average molecular weight Mn of 111,000 and a molecular weight distribution Mw/Mn of 1.47.

Preparation Example 3

Synthesis of (MMA-co-TBMA)-b-BA-b-(MMA-co-TBMA) acrylic block copolymer (hereinafter expressed by 5TBA7), wherein MMA/TBMA = 95/5 mol% and BA/(MMA-co-TBMA) = 70/30 wt%

In a polymerization vessel being a 5L separable flask whose inside air was replaced with nitrogen, 6.93g (48.3 mmol) of copper bromide was placed and 180 mL of acetonitrile (bubbled with nitrogen) was added. After heating and stirring at 70°C for 30 minutes, added were 5.80 g (16.1 mmol) of initiator diethyl 2,5-dibromoadipate and 900 mL (6.28 mol) of BA. The materials were heated and stirred at 85°C, and 1.68 mL (8.0 mmol) of ligand diethylenetriamine was added to start polymerization. When the conversion rate of the BA reached 95%, added were 40.9 mL (0.252 mol) of TBMA and 512.7 mL (4.79 mol) of MMA. When the conversion rates of the TBMA and the MMA reached 60% and 57% respectively, the reaction was terminated. The other process steps were conducted as in Preparation Example 1 and, thus, the targeted acrylic block copolymer 5TBA7 was yielded.

The resulting acrylic block copolymer 5TBA7 was subjected to GPC analysis to obtain a number average molecular weight Mn of 107,300 and a molecular weight distribution Mw/Mn of 1.58.

Preparation Example 4

Synthesis of (MMA-co-TBMA)-b-(BA-co-EA-co-MEA)-b-(MMA-co-TBMA) acrylic block copolymer, wherein MMA/TBMA = 95/5 mol% and (BA-co-EA-co-MEA)/(MMA-co-TBMA) = 70/30 wt%)

In a polymerization vessel being a 5L separable flask whose inside air was replaced with nitrogen, 12.0g (83.8 mmol) of copper bromide was placed and 180 mL of acetonitrile (bubbled with nitrogen) was added. After heating and stirring at 70°C for 30 minutes, added were 6.04g (16.8 mmol) of initiator diethyl 2,5-dibromoadipate, 362 mL (2.52 mol) of BA, 344 mL (3.17 mol) of EA, and 195 mL (1.51 mol) of MEA. The materials were heated and stirred at 85°C, and 1.75 mL (8.4 mmol) of ligand diethylenetriamine was added to start polymerization. When the conversion rates of the BA, the EA, and the MEA reached 95%, 95%, and 97% respectively, added were 42.5 mL (0.262 mol) of TBMA and 534 mL (5.02 mol) of MMA. When the conversion rates of the TBMA and the MMA reached 63% and 58% respectively, the reaction was terminated. The other process steps were conducted as in Preparation Example 1 and, thus, the targeted acrylic block copolymer 5T3A7 was yielded.

The resulting acrylic block copolymer 5T3A7 was subjected to GPC analysis to obtain a number average molecular weight Mn of 124000 and a molecular weight distribution Mw/Mn of 1.45.

Preparation Example 5

Synthesis of MMA-b-(BA-co-TBA)-b-MMA acrylic block copolymer (hereinafter expressed by 2.5STBA7), wherein BA/TBA = 97.5/2.5 mol% and (BA-co-TBA)/MMA = 70/30 wt%.

In a polymerization vessel being a 5L separable flask whose inside air was replaced with nitrogen, 11. 3 g (78.4 mmol) of copper bromide was placed and 180 mL of acetonitrile (bubbled with nitrogen) was added. After heating and stirring at 70°C for 30 minutes, added were 5.65g (15.7 mmol) of initiator diethyl 2,5-dibromoadipate, 877 mL (6.12 mol)

of BA, and 22.9 mL(0.16 mol) of TBA. The materials were heated and stirred at 85°C, and 1. 64 mL (7.8 mmol) of ligand diethylenetriamine was added to start polymerization. When the conversion rates of the BA and the TBA reached 95% and 100% respectively, 369 mL (3.45 mol) of MMA was added. When the conversion rate of the MMA reached 64%, the reaction was terminated. The other process steps were conducted as in Preparation Example 1 and, thus, the targeted acrylic block copolymer 2.5STBA7 was yielded.

The resulting acrylic block copolymer 2.5STBA7 was subjected to GPC analysis to obtain a number average molecular weight Mn of 97,900 and a molecular weight distribution Mw/Mn of 1.44.

Preparation Example 6

Synthesis of (TBMA) -b- (BA-co-EA-co-MEA) -b- (TBMA) acrylic block copolymer (hereinafter expressed by T3A), wherein (BA-co-EA-co-MEA)/(TBMA) = 97.1/2.9 wt%

In a polymerization vessel being a 5L separable flask whose inside air was replaced with nitrogen, 6.35g (44. 3 mmol) of copper bromide was placed and 140 mL of acetonitrile (bubbled with nitrogen) was added. After heating and stirring at 70°C for 30 minutes, added were 5.31g (14.8 mmol) of initiator diethyl 2,5-dibromoadipate, 281 mL (1.96 mol) of BA, 267 mL (2.47 mol) of EA, and 151 mL (1.18 mol) of MEA. The materials were heated and stirred at 85°C, and 1.54 mL (7.38 mmol) of ligand diethylenetriamine was added to start polymerization.

When the conversion rate of the BA reached 87%, 29.8 mL (0.18 mol) of TBMA was added. When the conversion rates of the BA and the TBMA reached 95% and 70% respectively, 1.0 L of toluene was added, and the reactor was cooled in a water bath to terminate the reaction. The other process steps were conducted as in Preparation Example 1 and, thus, the targeted acrylic block copolymer T3A was yielded. The resulting acrylic block copolymer T3A was subjected to GPC analysis to obtain a number average molecular weight Mn of 54, 000 and a molecular weight distribution Mw/Mn of 1.24.

Preparation Example 7

Synthesis of TBA-b-BA-b-TBA acrylic block copolymer (hereinafter expressed by TBA), wherein BA/TBA = 94.7/5.3 wt%

In a polymerization vessel being a 2L separable flask whose inside air was replaced with nitrogen, added were 3.34g (23.3 mmol) of copper bromide was placed and 50 mL of acetonitrile (bubbled with nitrogen) . After heating and stirring at 70°C for 30 minutes, added were 7.00g (19.4 mmol) of initiator diethyl 2,5-dibromoadipate and 500 mL (3.49 mol) of BA. The materials were heated and stirred at 75°C, and 0.16 mL (0.8 mmol) of ligand diethylenetriamine was added to start polymerization. When the conversion rate of the BA reached 87%, 42.3 mL (0.29 mol) of TBA was added. When the conversion rates of the BA and the TBA reached 95% and 62% respectively, 1.0 L of toluene was added, and the reactor was cooled in a water bath to terminate the reaction.

The reacted solution was diluted with 1.0 L of toluene, and 2.2g of p-toluenesulfonic acid monohydrate was added, followed by stirring at room temperature for 3 hours. To the polymer solution, 4.8g of adsorbent Kyowaad 500SH (produced by Kyowa Chemical Industry) was added and stirred at room temperature for another 3 hours. The adsorbent was filtered with Kiriyama funnel to yield a transparent and colorless polymer solution. The solution was dried to remove the solvents and residual monomers to yield a targeted acrylic block copolymer TBA.

The resulting acrylic block copolymer TBA was subjected to GPC analysis to obtain a number average molecular weight Mn of 26,100 and a molecular weight distribution Mw/Mn of 1.12.

Preparation Example 8

Synthesis of MMA-b-(BA-co-TBA)-b-MMA acrylic block copolymer (hereinafter expressed by 2STBA8.5), wherein BA/TBA = 97.9/2.1 mol% and (BA-co-TBA)/MMA = 85/15 wt%.

In a polymerization vessel being a 5L separable flask whose inside air was replaced with nitrogen, 7.29g (50.8 mmol) of copper bromide was placed and 140 mL of acetonitrile (bubbled with nitrogen) was added. After heating and stirring at 70°C for 30 minutes, added were 3.66g (10.2 mmol) of initiator diethyl 2,5-dibromoadipate, 685 mL (4.78 mol) of BA, and 15.0 mL (0.10 mol) of TBA. The materials were heated and stirred at 85°C, and 1. 06 mL (5.1 mmol) of ligand diethylenetriamine was added to start polymerization. When the conversion rates of the BA and the TBA reached 96% and 100% respectively, 176 mL (1.65 mol) of MMA was added. When the conversion rate of the MMA reached 58%, the reaction was terminated. The other process steps were conducted as in Preparation Example 1 and, thus, the targeted acrylic block copolymer 2STBA8.5 was yielded.

The resulting acrylic block copolymer 2STBA7 was subjected to GPC analysis to obtain a number average

molecular weight Mn of 111,500 and a molecular weight distribution Mw/Mn of 1.29. Preparation Example 9

Synthesis of MMA-b-TBA-b-BA-b-TBA-b-MMA acrylic block copolymer (hereinafter expressed by 2.5TBAT7), wherein BA/TBA = 97.5/2.5 mo1%, (TBA-b-BA-b-TBA)/MMA = 70/30 wt%.

In a polymerization vessel being a 5L separable flask whose inside air was replaced with nitrogen, 7.50g (52.3 mmol) of copper bromide was placed and 120 mL of acetonitrile (bubbled with nitrogen) was added. After heating and stirring at 70°C for 30 minutes, added were 3.77g (10.5 mmol) of initiator diethyl 2,5-dibromoadipate and 585 mL (4.08 mol) of BA. The materials were heated and stirred at 85°C, and 1.09 mL (5.2 mmol) of ligand diethylenetriamine was added to start polymerization. When the conversion rate of the BA reached 85%, 15.3 mL (0.10 mol) of TBA was added. When the conversion rates of the BA and the TBA reached 98% and 88% respectively, 367 mL (3.43 mol) of MMA was added. When the conversion rate of the MMA reached 63%, the reaction was terminated. The other process steps were conducted as in Preparation Example 1 and, thus, the targeted acrylic block copolymer 2.5TBAT8.5 was yielded. The resulting acrylic block copolymer 2.5TBAT7 was subjected to GPC analysis to obtain a number average molecular weight Mn of 113,500 and a molecular weight distribution Mw/Mn of 1.32.

Preparation Example 10

Synthesis of MMA-b-BA-b-MMA block copolymer (hereinafter expressed by MBAM), wherein BA/MMA = 70/30wt%

In a polymerization vessel being a 5L separable flask whose inside air was replaced with nitrogen, 11.3 g (78.5 mmol) of copper bromide was placed, and 180 mL of acetonitrile (dried with a molecular sieve and then bubbled with nitrogen) was added. After heating and stirring at 70°C for 5 minutes, the reaction system was cooled to room temperature again. Then, added were 5.7g (15.7 mmol) of initiator diethyl 2,5-dibromoadipate and 804.6 g (900.0 mL) of n-butyl acrylate. The materials were heated and stirred at 80°C, and 1.6 mL (7.9 mmol) of ligand diethylenetriamine was added to start polymerization. From the polymerization solution, about 0.2 mL of sample solution was taken out at constant time intervals, and the sample solutions were subjected to gas chromatography to determine the conversion rate of the butyl acrylate. The polymerization speed was controlled by appropriately adding triamine. When the conversion rate of the n-butyl acrylate reached 95%, added were 345.7 g (369.3 mL) of methyl methacrylate, 7.8 g (78.5 mmol) of copper chloride, 1.6 mL (7.9 mmol) of diethylenetriamine, and 1107.9 mL of toluene (dried with a molecular sieve and then bubbled with nitrogen). The conversion rate of the methyl methacrylate was determined in the same manner. When the conversion rates of the methyl methacrylate and the n-butyl acrylate reached 85% and 98% respectively, 1500 mL of toluene was added, and the reactor was cooled in a water bath to terminate the reaction. The polymer solution was constantly green during reaction. The reacted solution was diluted with 4000 mL of toluene, and 22.1g of p-toluenesulfonic acid monohydrate was added, followed by stirring at room temperature for 3 hours. After the precipitated insoluble content was removed by filtration with a Kiriyama funnel, 9.7 g of adsorbent Kyowaad 500SH was added to the polymer solution, followed by stirring at room temperature for another 3 hours . The adsorbent was filtered with Kiriyama funnel to yield a transparent and colorless polymer solution. The solution was dried to remove the solvents and residual monomers to yield a targeted MBAM. The resulting MBAM was subjected to GPC analysis to obtain a number average molecular weight Mn of 119,200 and a molecular weight distribution Mw/Mn of 1.51. According to composition analysis by NMR, BA/MMA was 72/28 (percent by weight).

Example 1

In a laboplastomill (produced by Toyo Seiki) set at 240°C, 45 g of the acrylic block copolymer 20TBA7 prepared in Preparation Example 1 and 0.23 g of Irganox 1010 (produced by Ciba-Geigy) were melt-kneaded at 100 rpm for 20 minutes to yield a targeted acrylic block copolymer containing the acid anhydride group (the resulting polymer was expressed by 20ANBA7) . The conversion of the portion of t-butyl ester to the acid anhydride group was confirmed by IR (infrared absorption spectrum) and $^{13}$C-NMR (nuclear magnetic resonance spectrum). More specifically, in IR, an absorption spectrum derived from the acid anhydride group was observed at 1800 $cm^{-1}$ after the conversion. In $^{13}$C-NMR, a signal at 82 ppm, which is provided by the quaternary carbon of t-butyl group, and a signal at 28 ppm, which is provided by the carbon of the methyl, were disappeared after the conversion. The resulting 20ANBA7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 190°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 190°C to form a cylindrical molding sample with a diameter of 30 mm and a thickness of 12 mm. The hardness of the molding sample was measured. Also, the resulting sample was subjected to hot press molding at 230°C in the same

manner to form a sheet with a thickness of 2 mm. The sheet was subjected to measurements of the oil resistance and the insoluble content.

Example 2

A targeted acrylic block copolymer containing the acid anhydride group (the resulting polymer was expressed by 20AN3A7) was produced from the acrylic block copolymer 20T3A7 prepared in Preparation Example 2 in the same manner as in Example 1. The resulting 20AN3A7, polyamide PA (UBE Nylon 3024U, produced by Ube Industries), and Irganox 1010 (produced by Ciba-Geigy) were melt-kneaded in the proportions shown in Table 1 using a laboplastomill (produced by Toyo Seiki) set at 190°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 190°C to form a cylindrical molding sample with a diameter of 30 mm and a thickness of 12 mm. The hardness of the molding sample was measured. Also, the resulting sample was subjected to hot press molding at 190°C in the same manner to form a sheet with a thickness of 2 mm. The sheet was subjected to measurements of the oil resistance and the insoluble content.

Example 3

A targeted acrylic block copolymer containing the acid anhydride group (the resulting polymer was expressed by 5ANBA7) was produced from the acrylic block copolymer 5TBA7 prepared in Preparation Example 3 in the same manner as in Example 1. The resulting 5ANBA7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 210°C.

Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 210°C to form a cylindrical molding sample with a diameter of 30 mm and a thickness of 12 mm. The hardness of the molding sample was measured. Also, the resulting sample was subjected to hot press molding at 210°C in the same manner to form a sheet with a thickness of 2 mm. The sheet was subjected to measurements of the oil resistance and the insoluble content.

Example 4

A targeted acrylic block copolymer containing the acid anhydride group (the resulting polymer was expressed by 5AN3A7) was produced from the acrylic block copolymer 5T3A7 prepared in Preparation Example 4 in the same manner as in Example 1. The resulting 5AN3A7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 210°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 210°C to form a cylindrical molding sample with a diameter of 30 mm and a thickness of 12 mm. The hardness of the molding sample was measured. Also, the resulting sample was subjected to hot press molding at 210°C in the same manner to form a sheet with a thickness of 2 mm. The sheet was subjected to measurements of the oil resistance and the insoluble content. Example 5

A targeted acrylic block copolymer containing the acid anhydride group (the resulting polymer was expressed by 2.5SANBA7) was produced from the acrylic block copolymer 2.5STBA7 prepared in Preparation Example 5 in the same manner as in Example 1. The resulting 2.5SANBA7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 220°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 220°C to form a cylindrical molding sample with a diameter of 30 mm and a thickness of 12 mm. The hardness of the molding sample was measured. Also, the resulting sample was subjected to hot press molding at 220°C in the same manner to form a sheet with a thickness of 2 mm. The sheet was subjected to measurements of the oil resistance and the insoluble content.

Example 6

A targeted acrylic block copolymer containing the acid anhydride group (the resulting polymer was expressed by AN3A) was produced from the acrylic block copolymer T3A prepared in Preparation Example 6 in the same manner as in Example 1. The resulting AN3A, polyamide PA (UBE Nylon 3024U, produced by Ube Industries), and Irganox 1010

(produced by Ciba-Geigy) were melt-kneaded in the proportions shown in Table 1 using a laboplastomill (produced by Toyo Seiki) set at 220°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 220°C to form a cylindrical molding sample with a diameter of 30 mm and a thickness of 12 mm. The hardness of the molding sample was measured. Also, the resulting sample was subjected to hot press molding at 220°C in the same manner to form a sheet with a thickness of 2 mm. The sheet was subjected to measurements of the oil resistance and the insoluble content.

Example 7

A targeted acrylic block copolymer containing the acid anhydride group (the resulting polymer was expressed by 20ANBA7) was produced from the acrylic block copolymer 20TBA7 prepared in Preparation Example 1 in the same manner as in Example 1. The resulting 20ANBA7, polyester PBT (Duranex FP300, produced by WinTech Polymer), and Irganox 1010 (produced by Ciba-Geigy) were melt-kneaded in the proportions shown in Table 1 using a laboplastomill (produced by Toyo Seiki) set at 240°C. Furthermore, 1,12-diaminododecane (produced by Tokyo Kasei Kogyo) was added in the proportion shown in Table 1 and melt-kneaded, and, thus, the reaction (dynamic vulcanization) was promoted. The resulting sample was subjected to hot press molding at 240°C to form a cylindrical molding sample with a diameter of 30 mm and a thickness of 12 mm. The hardness of the molding sample was measured. Also, the resulting sample was subjected to hot press molding at 240°C in the same manner to form a sheet with a thickness of 2 mm. The sheet was subjected to measurements of the oil resistance and the insoluble content.

Example 8

A targeted acrylic block copolymer containing the acid anhydride group (the resulting polymer was expressed by 5AN3A7) was produced from the acrylic block copolymer 5T3A7 prepared in Preparation Example 4 in the same manner as in Example 1. The resulting 5AN3A7, a ester elastomer (Pelprene P46D, produced by Toyobo), and Irganox 1010 (produced by Ciba-Geigy) were melt-kneaded in the proportions shown in Table 1 using a laboplastomill (produced by Toyo Seiki) set at 240°C.

Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 240°C to form a cylindrical molding sample with a diameter of 30 mm and a thickness of 12 mm. The hardness of the molding sample was measured. Also, the resulting sample was subjected to hot press molding at 240°C in the same manner to form a sheet with a thickness of 2 mm. The sheet was subjected to measurements of the oil resistance and the insoluble content.

Example 9

A targeted acrylic block copolymer containing the acid anhydride group (the resulting polymer was expressed by 2.5SANBA7) was produced from the acrylic block copolymer 2.5STBA7 prepared in Preparation Example 5 in the same manner as in Example 1. The resulting 2.5SANBA7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 220°C. Furthermore, hexamethylenediamine (produced by Tokyo Kasei Kogyo) was added in the proportion shown in Table 1 and melt-kneaded, and, thus, the reaction (dynamic vulcanization) was promoted. Then, Sanso Cizer N-400 (produced by New Japan Chemical) was added and melt-kneaded in the proportion shown in Table 1. The resulting sample was subj ected to hot press molding at 220°C to form a cylindrical molding sample with a diameter of 30 mm and a thickness of 12 mm. The hardness of the molding sample was measured. Also, the resulting sample was subjected to hot press molding at 220°C in the same manner to form a sheet with a thickness of 2 mm. The sheet was subjected to measurements of the oil resistance and the insoluble content.

Example 10

A targeted acrylic block copolymer containing the acid anhydride group (the resulting polymer was expressed by ANBA) was produced from the acrylic block copolymer TBA prepared in Preparation Example 7 in the same manner as in Example 1. The resulting ANBA, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 190°C.

Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was

subjected to hot press molding at 190°C to form a cylindrical molding sample with a diameter of 30 mm and a thickness of 12 mm. The hardness of the molding sample was measured. Also, the resulting sample was subjected to hot press molding at 190°C in the same manner to form a sheet with a thickness of 2 mm. The sheet was subjected to measurements of the oil resistance and the insoluble content.

Example 11

A targeted acrylic block copolymer containing the acid anhydride group (the resulting polymer was expressed by 2SANBA8 .5) was produced from the acrylic block copolymer 2STBA8 . 5 prepared in Preparation Example 8 in the same manner as in Example 1. The resulting 2SANBA8.5, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 190°C.

Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 190°C to form a cylindrical molding sample with a diameter of 30 mm and a thickness of 12 mm. The hardness of the molding sample was measured. Also, the resulting sample was subjected to hot press molding at 190°C in the same manner to form a sheet with a thickness of 2 mm. The sheet was subjected to measurements of the oil resistance and the insoluble content.

Example 12

A targeted acrylic block copolymer containing the acid anhydride group (the resulting polymer was expressed by 2.5ANBAAN7) was produced from the acrylic block copolymer 2.5TBAT7 prepared in Preparation Example 9 in the same manner as in Example 1. The resulting 2.5ANBAAN7, polyamide PA (UBE Nylon 3012U, produced by Ube Industries), and Irganox 1010 (produced by Ciba-Geigy) were melt-kneaded in the proportions shown in Table 1 using a laboplastomill (produced by Toyo Seiki) set at 190°C. Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subj ected to hot press molding at 190°C to form a cylindrical molding sample with a diameter of 30 mm and a thickness of 12 mm. The hardness of the molding sample was measured. Also, the resulting sample was subjected to hot press molding at 190°C in the same manner to form a sheet with a thickness of 2 mm. The sheet was subjected to measurements of the oil resistance and the insoluble content.

Example 13

A targeted acrylic block copolymer containing the acid anhydride group (the resulting polymer was expressed by 2.5SANBA7) was produced from the acrylic block copolymer 2.5TBAT7 prepared in Preparation Example 5 in the same manner as in Example 1. The resulting 2.5SANBA7, polyamide PA (UBE Nylon 7024B, produced by Ube Industries), and Irganox 1010 (produced by Ciba-Geigy) were melt-kneaded in the proportions shown in Table 1 using a laboplastomill (produced by Toyo Seiki) set at 220°C.

Furthermore, hexamethylenediamine (produced by Tokyo Kasei Kogyo) was added in the proportion shown in Table 1 and melt-kneaded, and, thus, the reaction (dynamic vulcanization) was promoted. The resulting sample was subjected to hot press molding at 220°C to form a cylindrical molding sample with a diameter of 30 mm and a thickness of 12 mm. The hardness of the molding sample was measured. Also, the resulting sample was subjected to hot press molding at 220°C in the same manner to form a sheet with a thickness of 2 mm. The sheet was subjected to measurements of the oil resistance and the insoluble content.

Comparative Example 1

MBAM prepared in Preparation Example 10 and Irganox 1010 (produced by Ciba-Geigy) were melt-kneaded in the proportions shown in Table 1 using a laboplastomill (produced by Toyo Seiki) set at 190°C at a screw revolution of 50 rpm, and thus a sample was prepared. The resulting sample was subjected to hot press molding at 190°C to form a cylindrical molding sample with a diameter of 30 mm and a thickness of 12 mm. The hardness of the molding sample was measured. Also, the resulting sample was subjected to hot press molding at 190°C in the same manner to form a sheet with a thickness of 2 mm. The sheet was subjected to measurements of the oil resistance and the insoluble content. MBAM by itself has insufficient oil resistance and heat resistance.

Comparative Example 2

MBAM prepared in Preparation Example 10, polyamide PA (UBE Nylon 1013B, produced by Ube Industries), and Irganox 1010 (produced by Ciba-Geigy) were melt-kneaded in the proportions shown in Table 1 using a laboplastomill (produced by Toyo Seiki) set at 230°C at a screw revolution of 100 rpm. The resulting sample was subjected to hot press molding at 230°C to form a cylindrical molding sample with a diameter of 30 mm and a thickness of 12 mm. The hardness of the molding sample was measured. Also, the resulting sample was subjected to hot press molding at 230°C to form a sheet with a thickness of 2 mm. The sheet was subjected to measurements of the oil resistance and the insoluble content. It is shown that the sample prepared by only melt-kneading MBAM and PA has insufficient oil resistance and heat resistance.

Table

| Content (parts by weight) | | Example | | | | | | | | | | | | | COMPARATIVE EXAMPLE | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 |
| Constit uent (A) | 20ANBA7 | 100 | | | | | | 100 | | | | | | | | |
| | 20ANBA7 | | 100 | | | | | | | | | | | | | |
| | 5ANBA7 | | | 100 | | | | | | | | | | | | |
| | 5ANBA7 | | | | 100 | | | | 100 | | | | | | | |
| | 2.5SANBA7 | | | | | 100 | | | | 100 | | | | 100 | | |
| | ANBA | | | | | | 100 | | | | | | | | | |
| | ANBA | | | | | | | | | | 100 | | | | | |
| | 2SABA8.5 | | | | | | | | | | | 100 | | | | |
| | 2.5ANBAAN7 | | | | | | | | | | | | 100 | | | |
| | MBAM | | | | | | | | | | | | | | 100 | 100 |
| Constit uent (B) | Hexamethylenediamine | 2.1 | 3.0 | 1.3 | 1.8 | 2.2 | 1.5 | | 2.6 | 2.1 | 4.7 | 1.9 | 0.8 | 3.8 | | |
| | Diaminododecane | | | | | | | 2.8 | | | | | | | | |
| Constit uent (c) | PA (3012U) | 30 | | 40 | 30 | 30 | | | | 30 | 30 | 50 | 30 | | | |
| | PA (3024U) | | 40 | | | | 40 | | | | | | | | | |
| | PA (7024B) | | | | | | | | | | | | | 30 | | |
| | PA (1013B) | | | | | | | | | | | | | | | 20 |
| | PBT (FP300) | | | | | | | 40 | | | | | | | | |
| | TPEE (Felprene F46D) | | | | | | | | 40 | | | | | | | |
| Constit uent (D) | Sanso Cizer N400 | | | | | | | | | 20 | | | | | | |
| Stabilizer: Irganox 1010 | | 0.5 | 0.5 | 0.5 | 0.5 | 0.5 | 0.5 | 0.5 | 0.5 | 0.5 | 0.5 | 0.5 | 0.5 | 0.5 | 0.2 | 0.2 |

(continued)

| Content (parts by weight) | Example | | | | | | | | | | | | | COMPARATIVE EXAMPLE | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 1 | 2 |
| Hardness (JIS-A), immediately after | 87 | 90 | 94 | 91 | 81 | 81 | 86 | 60 | 65 | 90 | 96 | 74 | 89 | 22 | 26 |
| Strength at break (MPa) | 2.9 | 2.8 | 9.8 | 8.1 | 15.8 | 5.0 | 3.1 | 4.3 | 11.5 | 11.1 | 18.7 | 7.8 | 13.6 | 8.6 | 5.1 |
| Elongation at break (%) | 51.2 | 14.9 | 87.6 | 95 | 195 | 74.1 | 31.4 | 196 | 208 | 161 | 182 | 178 | 181 | 339 | 255 |
| Elastic modulus (MPa) | 18 | 65.3 | 68 | 35.1 | 24.4 | 27 | 14.4 | 8.6 | 13.3 | 31.5 | 91.7 | 8.5 | 17.1 | 0.6 | 0.9 |
| Oil resistance (wt%) | 36.8 | 10 | 13.3 | 17.9 | 36.2 | 15.1 | 22.4 | 26.6 | 24.6 | 29.1 | 26.4 | 31.2 | 33.5 | 54.9 | dissolved |
| Appearance after test | good | good | good | good | good | good | good | good | good | good | good | good | good | bad | bad |
| Heat resistance (°C) | 175 | 178 | 180 | 179 | 182 | 179 | 164 | 131 | 174 | 181 | 183 | 180 | 205 | 119 | - |
| Insoluble content (wt%) | 90.8 | 81.7 | 93.6 | 86.1 | 100 | 87.6 | 89.6 | 90.1 | 85.6 | 98.5 | 99.4 | 99.8 | 98.0 | 0 | 16 |

Table 1 (Examples 1 to 12 and Comparative Examples 1 and 2) clearly shows that the oil resistance and heat resistance of the thermoplastic elastomer composition of the present invention are improved.

The thermoplastic elastomer composition provided by the present invention, which is prepared by thermally, dynamically vulcanizing a composition comprising the (meth)acrylic block copolymer (A) and the thermoplastic resin (C), has enhanced oil resistance, heat resistance, and mechanical characteristics, maintaining the characteristics acrylic block copolymers inherently have. Accordingly, it can be suitably used for car components and electrical or electronic components. Specifically, it can be used for various oil seals, such as oil seals and oil seals for reciprocation; various packing, such as grand packing, lip packing, and squeeze packing; various boots, such as constant velocity joint boots, strut boots, rack-and-pinion boots, brake booster boots, and steering ball joint boots; various hoses, such as fuel hose, gasoline hose, air-conditioning hose, brake hose, air hose, air duct hose, and air cleaner hose; various dust covers, such as those for suspensions, suspension tie-rods, and stabilizer tie-rods; various gaskets, such as resin intake manifold gaskets, throttle body gaskets, power steering vane pump gaskets, head cover gaskets, hot-water self-feeding pump gaskets, filter gaskets, pipe joint (ABS & HBB) gaskets, HDD top cover gaskets, HDD connector gaskets, cylinder head caskets in combination with a metal, car cooler compressor gaskets, and gaskets for car engine peripherals, AT separate plates, general-purpose gaskets (industrial sewing machines, peggers, and so forth); various valves, such as needle valves, plunger valves, valves for water or gas, brake valves, potable valves, and safety valves for aluminium electrolytic capacitors; various stoppers principally having a shock-absorbing function, such as diaphragms for vacuum boosters and water or gas, sealing washers, bore plugs, and high-precision stoppers; and high-precision sealing rubbers, such as plug tube seals, injection pipe seals, oil receivers, brake drum seals, light-shielding seals, plug seals, connector seals, and keyless entry covers. In addition, the thermoplastic elastomer composition can be used for sealing products of vehicles, such as door weather strips and other weather strips, trunk seals, and glass run channels.

For forming the above-enumerated products, the polymer or polymer composition described above is subjected to extrusion molding, compression molding, blow molding, calendaring, vacuum molding, foam molding, injection molding, injection blow molding, and other molding techniques.

The thermoplastic elastomer composition prepared by thermally, dynamic vulcanizing a composition comprising the (meth)acrylic block copolymer (A) and the thermoplastic resin (C) can be widely and suitably used for hoses, sheets, films, dampers, adhesive base polymers, resin modifiers, and so forth in the fields of packaging material, civil engineering and construction material, and sundry articles, in addition to the car components and electrical or electronic components.

## Claims

1. A thermoplastic elastomer composition comprising

(A) a (meth)acrylic block copolymer;
(B) a compound containing at least two amino groups in the molecule thereof; and
(C) a thermoplastic resin,

wherein the (meth)acrylic block copolymer (A) and the compound (B) are dynamically vulcanized in the thermoplastic resin (C), and the (meth)acrylic block copolymer (A) comprises:

(A1) a (meth)acrylic polymer block; and
(A2) an acrylic polymer block, and

wherein at least one of the polymer blocks has at least one acid anhydride group expressed by general formula (1):

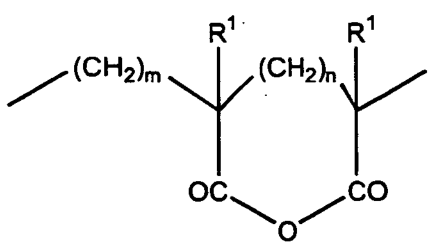

(1)

(wherein $R^1$ each represent hydrogen or the methyl group and may be the same or different; n represents an integer in the range of 0 to 3; and m represents an integer of 0 or 1).

2. The thermoplastic elastomer composition according to Claim 1, wherein the (meth) acrylic block copolymer (A) is at least one selected from the group consisting of copolymers expressed by the general formulas $(A1\text{-}A2)_n$, $A2\text{-}(A1\text{-}A2)_n$, and $(A1\text{-}A2)_n\text{-}A1$, where n represents an integer 1 or more.

3. The thermoplastic elastomer composition according to Claim 1 or 2, wherein the (meth)acrylic block copolymer (A) comprises 0.1 to 60 percent by weight of the (meth) acrylic polymer block (A1) and 99.9 to 40 percent by weight of the acrylic polymer block (A2).

4. The thermoplastic elastomer composition according to any one of Claims 1 to 3, wherein the (meth)acrylic polymer block (A1) contains the acid anhydride group.

5. The thermoplastic elastomer composition according to any one of Claims 1 to 3, wherein the acrylic polymer block (A2) contains the acid anhydride group.

6. The thermoplastic elastomer composition according to any one of Claims 1 to 5, wherein the (meth)acrylic block copolymer (A) is prepared under control by atom transfer radical polymerization.

7. The thermoplastic elastomer composition according to any one of Claims 1 to 6, wherein the thermoplastic resin is a polyamide-based resin and/or a polyester-based resin.

8. The thermoplastic elastomer composition according to Claim 7, wherein the thermoplastic resin is a polyamide-based resin.

9. The thermoplastic elastomer composition according to any one of Claims 1 to 8, further comprising (D) a softening agent in an amount of 1 to 300 parts by weight relative to 100 parts by weight of the (meth)acrylic block copolymer (A).

**Patentansprüche**

1. Thermoplastische Elastomerzusammensetzung, umfassend

(A) ein (Meth)acryl-Blockcopolymer;
(B) eine Verbindung, welche mindestens zwei Aminogruppen in ihrem Molekül enthält; und
(C) ein thermoplastisches Harz,

wobei das (Meth)acryl-Blockcopolymer (A) und die Verbindung (B) in dem thermoplastischen Harz (C) dynamisch vulkanisiert sind und das (Meth)acryl-Blockcopolymer (A)

(A1) einen (Meth)acryl-Polymerblock; und
(A2) einen Acryl-Polymerblock umfasst, und

wobei mindestens einer der Polymerblöcke mindestens einen Säureanhydrid-Rest aufweist, ausgedrückt durch die allgemeine Formel (1):

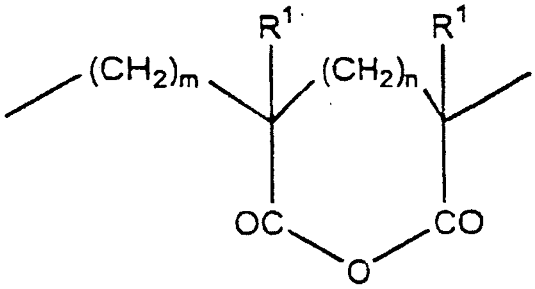

(1)

(wobei $R^1$ jeweils Wasserstoff oder die Methylgruppe darstellt und gleich oder verschieden sein kann; n eine ganze Zahl im Bereich von 0 bis 3 darstellt; und m eine ganze Zahl von 0 oder 1 darstellt).

2. Thermoplastische Elastomerzusammensetzung gemäß Anspruch 1, wobei das (Meth)acryl-Blockcopolymer (A) mindestens eines ist, ausgewählt aus Copolymeren, ausgedrückt durch die allgemeinen Formeln $(A1\text{-}A2)_n$, $A2\text{-}(A1\text{-}A2)_n$ und $(A1\text{-}A2)_n\text{-}A1$, wobei n eine ganze Zahl 1 oder mehr darstellt.

3. Thermoplastische Elastomerzusammensetzung gemäß Anspruch 1 oder 2, wobei das (Meth)acryl-Blockcopolymer (A) 0,1 bis 60 Gewichtsprozent des (Meth)acryl-Polymerblocks (A1) und 99,9 bis 40 Gewichtsprozent des Acryl-Polymerblocks (A2) umfasst.

4. Thermoplastische Elastomerzusammensetzung gemäß einem der Ansprüche 1 bis 3, wobei der (Meth)acryl-Polymerblock (A1) den Säureanhydrid-Rest enthält.

5. Thermoplastische Elastomerzusammensetzung gemäß einem der Ansprüche 1 bis 3, wobei der Acryl-Polymerblock (A2) den Säureanhydrid-Rest enthält.

6. Thermoplastische Elastomerzusammensetzung gemäß einem der Ansprüche 1 bis 5, wobei das (Methy)acryl-Blockcopolymer (A) kontrolliert durch Atomübertragungs-Radikalpolymerisation hergestellt wird.

7. Thermoplastische Elastomerzusammnesetzung gemäß einem der Ansprüche 1 bis 6, wobei das thermoplastische Harz ein Harz auf Polyamid-Basis und/oder ein Harz auf Polyesterbasis ist.

8. Thermoplastische Elastomerzusammensetzung gemäß Anspruch 7, wobei das thermoplastische Harz ein Harz auf Polyamid-Basis ist.

9. Thermoplastische Elastomerzusammensetzung gemäß einem der der Ansprüche 1 bis 8, ferner umfassend (D) einen Weichmacher in einer Menge von 1 bis 300 Gewichtsteilen, bezogen auf 100 Gewichtsteile des (Meth)acryl-Blockcopolymers (A).

## Revendications

1. Composition d'élastomère thermoplastique, comprenant :

   (A) un copolymère à bloc (méth)acrylique ;
   (B) un composé contenant au moins deux groupes amino dans la molécule de celui-ci ; et
   (C) une résine thermoplastique,

   dans laquelle le copolymère à bloc (méth)-acrylique (A) et le composé (B) sont vulcanisés dynamiquement dans la résine thermoplastique (C), et le copolymère à bloc (méth)acrylique (A) comprend :

   (A1) un bloc de polymère (méth)acrylique ; et
   (A2) un bloc de polymère acrylique, et

   dans lequel au moins un des blocs de polymère a au moins un groupe anhydride d'acide exprimé par la formule générale (1) :

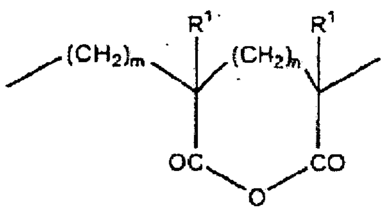

(1)

   (dans laquelle chaque $R^1$ représente l'hydrogène ou le groupe méthyle et peuvent être identiques ou différents ; n représente un entier dans la plage allant de 0 à 3; et m représente un entier de 0 ou 1).

2. Composition d'élastomère thermoplastique selon la revendication 1, dans laquelle le copolymère à bloc (méth)acrylique (A) est au moins un élément choisi dans le groupe constitué par les copolymères exprimés par les formules générales $(A1\text{-}A2)_n$, $A2\text{-}(A1\text{-}A2)_n$ et $(A1\text{-}A2)_n\text{-}A1$, où n représente un entier de 1 ou plus.

**3.** Composition d'élastomère thermoplastique selon la revendication 1 ou 2, dans laquelle le copolymère à bloc (méth) acrylique (A) comprend 0,1 à 60 % en poids du bloc de polymère (méth)acrylique (A1) et 99,9 à 40 % en poids du bloc de polymère acrylique (A2).

**4.** Composition d'élastomère thermoplastique selon l'une quelconque des revendications 1 à 3, dans laquelle le bloc de polymère (méth)-acrylique (A1) contient le groupe anhydride d'acide.

**5.** Composition d'élastomère thermoplastique selon l'une quelconque des revendications 1 à 3, dans laquelle le bloc de polymère acrylique (A2) contient le groupe anhydride d'acide.

**6.** Composition d'élastomère thermoplastique selon l'une quelconque des revendications 1 à 5, dans laquelle le copolymère à bloc (méth)-acrylique (A) est préparé sous le contrôle de la polymérisation radicalaire par transfert atomique.

**7.** Composition d'élastomère thermoplastique selon l'une quelconque des revendications 1 à 6, dans laquelle la résine thermoplastique est une résine à base de polyamide et / ou une résine à base de polyester.

**8.** Composition d'élastomère thermoplastique selon la revendication 7, dans laquelle la résine thermoplastique est une résine à base de polyamide.

**9.** Composition d'élastomère thermoplastique selon l'une quelconque des revendications 1 à 8, comprenant en outre (D) un agent de ramollissement en une quantité de 1 à 300 parties en poids, par rapport aux 100 parties en poids du copolymère à bloc méthacrylique (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02092696 A
- EP 0332454 A
- JP 61034050 A
- JP 53021021 A
- JP 2553134 B
- JP 10053697 A
- JP 11349734 A
- JP 2000026720 A
- JP 11246749 A


### Non-patent literature cited in the description


- Polymer Handbook. Wiley-Interscience, 1989
- **WU et al.** Polym. Eng. and Sci. 1990, vol. 30, 753
- **HATADA et al.** *J. M. S. -PURE APPL. CHEM.,* 1993, vol. A30 (9,10), 645-667
- *J. Am. Chem. Soc.,* 1994, vol. 116, 7943
- *Macromolecules,* 1994, vol. 27, 7228
- **MATYJASZEWSKI et al.** *J. Am. Chem. Soc.,* 1995, vol. 117, 5614
- *Macromolecules,* 1995, vol. 28, 7901
- *Science,* 1996, vol. 272, 866
- **SAWAMOTO et al.** *Macromolecules,* 1995, vol. 28, 1721